# EUROPEAN PATENT SPECIFICATION

(11) **EP 2 914 831 B1**
(45) Date of publication and mention of the grant of the patent: **03.06.2020**
(21) Application number: 13793019.4
(22) Date of filing: 31.10.2013
(51) Int. Cl.: F02C 3/34, F02C 9/00

(54) **STOICHIOMETRIC COMBUSTION CONTROL FOR GAS TURBINE SYSTEM WITH EXHAUST GAS RECIRCULATION**
STÖCHIOMETRISCHE VERBRENNUNGSKONTROLLE FÜR GASTURBINENANLAGE MIT ABGASRÜCKFÜHRUNG
RÉGULATION DE COMBUSTION STOECHIOMÉTRIQUE POUR UN SYSTÈME DE TURBINE À GAZ AVEC RECIRCULATION DE GAZ D'ÉCHAPPEMENT

(30) Priority: 02.11.2012 US 201261722118 P; 02.11.2012 US 201261722115 P; 02.11.2012 US 201261722114 P; 02.11.2012 US 201261722111 P; 28.12.2012 US 201261747209 P; 30.10.2013 US 201314067797
(43) Date of publication of application: 09.09.2015
(73) Proprietor: General Electric Company, Schenectady, NY 12345 (US); ExxonMobil Upstream Research Company, Spring TX 77389 (US)
(72) Inventor: KRULL, Anthony Wayne, Louisville, Kentucky 40225 (US); MORGAN, Rex Allen, Greenville, South Carolina 29615 (US); MINTO, Karl Dean, Schenectady, New York 12345 (US)
(74) Representative: Abel & Imray
(86) International application number: PCT/US2013/067902
(87) International publication number: WO 2014/071089

(56) References cited:
- WO-A1-93/09339
- WO-A1-2012/018458
- US-A1- 2012 023 960
- US-A1- 2012 096 829

## Description

### BACKGROUND OF THE INVENTION

The subject matter disclosed herein relates to gas turbine engines, and more specifically, to stoichiometric control systems and methods of gas turbines.

Gas turbine engines are used in a wide variety of applications, such as power generation, aircraft, and various machinery. Gas turbine engine generally combust a fuel with an oxidant (e.g., air) in a combustor section to generate hot combustion products, which then drive one or more turbine stages of a turbine section. In turn, the turbine section drives one or more compressor stages of a compressor section, thereby compressing oxidant for intake into the combustor section along with the fuel. Again, the fuel and oxidant mix in the combustor section, and then combust to produce the hot combustion products. Gas turbine engines generally premix the fuel and oxidant along one or more flow paths upstream from a combustion chamber of the combustor section, and thus gas turbine engines generally operate with premix flames. Unfortunately, the premix flames may be difficult to control or maintain, which can impact various exhaust emission and power requirements. Furthermore, gas turbine engines typically consume a vast amount of air as the oxidant, and output a considerable amount of exhaust gas into the atmosphere. In other words, the exhaust gas is typically wasted as a byproduct of the gas turbine operation.

WO 2012/018458 A1 discloses a combustor for a gas turbine. US 2012/023960 A1 discloses methods of operating and controlling stoichiometric exhaust gas recirculation turbine systems. US 2012/0096829 A1 discloses a system including a controller configured to control a semi-closed power cycle system. WO 93/09339 A1 discloses a fuel control system for a gas turbine engine.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, the present invention provides a system as claimed in claim 1.

In a second embodiment, the present invention provides a method as claimed in claim 10.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a diagram of an embodiment of a system having a turbine-based service system coupled to a hydrocarbon production system;
FIG. 2 is a diagram of an embodiment of the system of FIG. 1, further illustrating a control system and a combined cycle system;
FIG. 3 is a diagram of an embodiment of the system of FIGS. 1 and 2, further illustrating details of a gas turbine engine, exhaust gas supply system, and exhaust gas processing system;
FIG. 4 is a flow chart of an embodiment of a process for operating the system of FIGS. 1-3;
FIG. 5 is a diagram of an embodiment of the gas turbine engine of FIGS. 1-3, further illustrating details of the combustor, fuel nozzle, and flows of oxidant, fuel, and diluent;
FIG. 6 is a diagram of an embodiment of a plurality of sensors and actuators communicatively coupled to the turbine-based system and control system of FIGS. 1-3;
FIG. 7 is a diagram of an embodiment of a model based control system suitable for use by the control system of FIGS. 1-3; and
FIG. 8 is a flowchart of an embodiment of a process suitable for using model based control to control the turbine-based system of FIGS. 1-3.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As discussed in detail below, the disclosed embodiments relate generally to gas turbine systems with exhaust gas recirculation (EGR), and particularly stoichiometric operation of the gas turbine systems using EGR. For example, the gas turbine systems may be configured to recirculate the exhaust gas along an exhaust recirculation path, stoichiometrically combust fuel and oxidant along with at least some of the recirculated exhaust gas, and capture the exhaust gas for use in various target systems. The recirculation of the exhaust gas along with stoichiometric combustion may help to increase the concentration level of carbon dioxide (CO₂) in the exhaust gas, which can then be post treated to separate and purify the CO₂ and nitrogen (N₂) for use in various target systems. The gas turbine systems also may employ various exhaust gas processing (e.g., heat recovery, catalyst reactions, etc.) along the exhaust recirculation path, thereby increasing the concentration level of CO₂, reducing concentration levels of other emissions (e.g., carbon monoxide, nitrogen oxides, and unburnt hydrocarbons), and increasing energy recovery (e.g., with heat recovery units). Furthermore, the gas turbine engines may be configured to combust the fuel and oxidant with one or more diffusion flames (e.g., using diffusion fuel nozzles), premix flames (e.g., using premix fuel nozzles), or any combination thereof. In certain embodiments, the diffusion flames may help to maintain stability and operation within certain limits for stoichiometric combustion, which in turn helps to increase production of CO₂. For example, a gas turbine system operating with diffusion flames may enable a greater quantity of EGR, as compared to a gas turbine system operating with premix flames. In turn, the increased quantity of EGR helps to increase CO₂ production. Possible target systems include pipelines, storage tanks, carbon sequestration systems, and hydrocarbon production systems, such as enhanced oil recovery (EOR) systems.

The systems and methods described herein provide for model based stoichiometric control (MBSC) of turbomachinery such as gas turbine systems. A direct measure of stoichiometry, such as a measure provided by using a lambda meter, is compared to a model-based derivation of stoichiometry. An difference between the direct measure and the measured derived by the model is used to adjust the control of the gas turbine, for example, by changing fuel flows, recirculation gas (e.g.., exhaust gas) flows, inlet guide vane (IGV) positions, and the like. In another embodiment, products of combustion are measured and used to derive stoichiometric values, and the values compared to model-derived values. The control system may then use a difference between the measured and derived values to similarly adjust control.

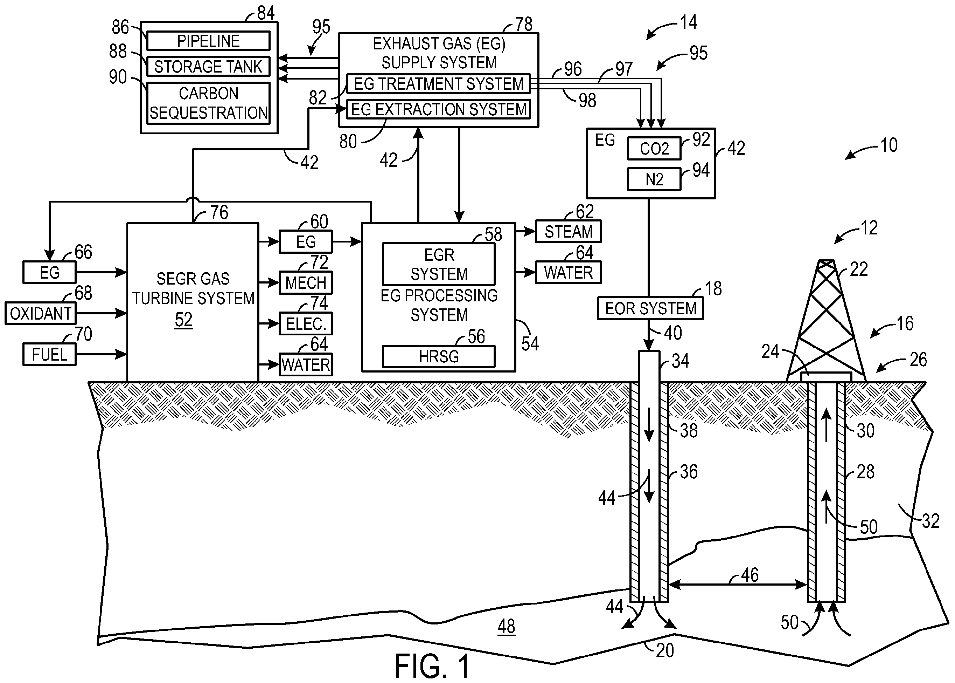

FIG. 1 is a diagram of an embodiment of a system 10 having an hydrocarbon production system 12 associated with a turbine-based service system 14. As discussed in further detail below, various embodiments of the turbine-based service system 14 are configured to provide various services, such as electrical power, mechanical power, and fluids (e.g., exhaust gas), to the hydrocarbon production system 12 to facilitate the production or retrieval of oil and/or gas. In the illustrated embodiment, the hydrocarbon production system 12 includes an oil/gas extraction system 16 and an enhanced oil recovery (EOR) system 18, which are coupled to a subterranean reservoir 20 (e.g., an oil, gas, or hydrocarbon reservoir). The oil/gas extraction system 16 includes a variety of surface equipment 22, such as a Christmas tree or production tree 24, coupled to an oil/gas well 26. Furthermore, the well 26 may include one or more tubulars 28 extending through a drilled bore 30 in the earth 32 to the subterranean reservoir 20. The tree 24 includes one or more valves, chokes, isolation sleeves, blowout preventers, and various flow control devices, which regulate pressures and control flows to and from the subterranean reservoir 20. While the tree 24 is generally used to control the flow of the production fluid (e.g., oil or gas) out of the subterranean reservoir 20, the EOR system 18 may increase the production of oil or gas by injecting one or more fluids into the subterranean reservoir 20.

Accordingly, the EOR system 18 may include a fluid injection system 34, which has one or more tubulars 36 extending through a bore 38 in the earth 32 to the subterranean reservoir 20. For example, the EOR system 18 may route one or more fluids 40, such as gas, steam, water, chemicals, or any combination thereof, into the fluid injection system 34. For example, as discussed in further detail below, the EOR system 18 may be coupled to the turbine-based service system 14, such that the system 14 routes an exhaust gas 42 (e.g., substantially or entirely free of oxygen) to the EOR system 18 for use as the injection fluid 40. The fluid injection system 34 routes the fluid 40 (e.g., the exhaust gas 42) through the one or more tubulars 36 into the subterranean reservoir 20, as indicated by arrows 44. The injection fluid 40 enters the subterranean reservoir 20 through the tubular 36 at an offset distance 46 away from the tubular 28 of the oil/gas well 26. Accordingly, the injection fluid 40 displaces the oil/gas 48 disposed in the subterranean reservoir 20, and drives the oil/gas 48 up through the one or more tubulars 28 of the hydrocarbon production system 12, as indicated by arrows 50. As discussed in further detail below, the injection fluid 40 may include the exhaust gas 42 originating from the turbine-based service system 14, which is able to generate the exhaust gas 42 on-site as needed by the hydrocarbon production system 12. In other words, the turbine-based system 14 may simultaneously generate one or more services (e.g., electrical power, mechanical power, steam, water (e.g., desalinated water), and exhaust gas (e.g., substantially free of oxygen)) for use by the hydrocarbon production system 12, thereby reducing or eliminating the reliance on external sources of such services.

In the illustrated embodiment, the turbine-based service system 14 includes a stoichiometric exhaust gas recirculation (SEGR) gas turbine system 52 and an exhaust gas (EG) processing system 54. The gas turbine system 52 may be configured to operate in a stoichiometric combustion mode of operation (e.g., a stoichiometric control mode) and a non-stoichiometric combustion mode of operation (e.g., a non-stoichiometric control mode), such as a fuel-lean control mode or a fuel-rich control mode. In the stoichiometric control mode, the combustion generally occurs in a substantially stoichiometric ratio of a fuel and oxidant, thereby resulting in substantially stoichiometric combustion. In particular, stoichiometric combustion generally involves consuming substantially all of the fuel and oxidant in the combustion reaction, such that the products of combustion are substantially or entirely free of unburnt fuel and oxidant. One measure of stoichiometric combustion is the equivalence ratio, or phi (φ), which is the ratio of the actual fuel/oxidant ratio relative to the stoichiometric fuel/oxidant ratio. An equivalence ratio of greater than 1.0 results in a fuel-rich combustion of the fuel and oxidant, whereas an equivalence ratio of less than 1.0 results in a fuel-lean combustion of the fuel and oxidant. In contrast, an equivalence ratio of 1.0 results in combustion that is neither fuel-rich nor fuel-lean, thereby substantially consuming all of the fuel and oxidant in the combustion reaction. In context of the disclosed embodiments, the term stoichiometric or substantially stoichiometric may refer to an equivalence ratio of approximately 0.95 to approximately 1.05. However, the disclosed embodiments may also include an equivalence ratio of 1.0 plus or minus 0.01, 0.02, 0.03, 0.04, 0.05, or more. Again, the stoichiometric combustion of fuel and oxidant in the turbine-based service system 14 may result in products of combustion or exhaust gas (e.g., 42) with substantially no unburnt fuel or oxidant remaining. For example, the exhaust gas 42 may have less than 1, 2, 3, 4, or 5 percent by volume of oxidant (e.g., oxygen), unburnt fuel or hydrocarbons (e.g., HCs), nitrogen oxides (e.g., NOx), carbon monoxide (CO), sulfur oxides (e.g., SO_{X}), hydrogen, and other products of incomplete combustion. By further example, the exhaust gas 42 may have less than approximately 10, 20, 30, 40, 50, 60, 70, 80, 90, 100, 200, 300, 400, 500, 1000, 2000, 3000, 4000, or 5000 parts per million by volume (ppmv) of oxidant (e.g., oxygen), unburnt fuel or hydrocarbons (e.g., HCs), nitrogen oxides (e.g., NO_{X}), carbon monoxide (CO), sulfur oxides (e.g., SO_{X}), hydrogen, and other products of incomplete combustion. However, the disclosed embodiments also may produce other ranges of residual fuel, oxidant, and other emissions levels in the exhaust gas 42. As used herein, the terms emissions, emissions levels, and emissions targets may refer to concentration levels of certain products of combustion (e.g., NO_{X}, CO, SO_{X}, O₂, N₂, H₂, HCs, etc.), which may be present in recirculated gas streams, vented gas streams (e.g., exhausted into the atmosphere), and gas streams used in various target systems (e.g., the hydrocarbon production system 12).

Although the SEGR gas turbine system 52 and the EG processing system 54 may include a variety of components in different embodiments, the illustrated EG processing system 54 includes a heat recovery steam generator (HRSG) 56 and an exhaust gas recirculation (EGR) system 58, which receive and process an exhaust gas 60 originating from the SEGR gas turbine system 52. The HRSG 56 may include one or more heat exchangers, condensers, and various heat recovery equipment, which collectively function to transfer heat from the exhaust gas 60 to a stream of water, thereby generating steam 62. The steam 62 may be used in one or more steam turbines, the EOR system 18, or any other portion of the hydrocarbon production system 12. For example, the HRSG 56 may generate low pressure, medium pressure, and/or high pressure steam 62, which may be selectively applied to low, medium, and high pressure steam turbine stages, or different applications of the EOR system 18. In addition to the steam 62, a treated water 64, such as a desalinated water, may be generated by the HRSG 56, the EGR system 58, and/or another portion of the EG processing system 54 or the SEGR gas turbine system 52. The treated water 64 (e.g., desalinated water) may be particularly useful in areas with water shortages, such as inland or desert regions. The treated water 64 may be generated, at least in part, due to the large volume of air driving combustion of fuel within the SEGR gas turbine system 52. While the on-site generation of steam 62 and water 64 may be beneficial in many applications (including the hydrocarbon production system 12), the on-site generation of exhaust gas 42, 60 may be particularly beneficial for the EOR system 18, due to its low oxygen content, high pressure, and heat derived from the SEGR gas turbine system 52. Accordingly, the HRSG 56, the EGR system 58, and/or another portion of the EG processing system 54 may output or recirculate an exhaust gas 66 into the SEGR gas turbine system 52, while also routing the exhaust gas 42 to the EOR system 18 for use with the hydrocarbon production system 12. Likewise, the exhaust gas 42 may be extracted directly from the SEGR gas turbine system 52 (i.e., without passing through the EG processing system 54 for use in the EOR system 18 of the hydrocarbon production system 12.

The exhaust gas recirculation is handled by the EGR system 58 of the EG processing system 54. For example, the EGR system 58 includes one or more conduits, valves, blowers, exhaust gas treatment systems (e.g., filters, particulate removal units, gas separation units, gas purification units, heat exchangers, heat recovery units, moisture removal units, catalyst units, chemical injection units, or any combination thereof), and controls to recirculate the exhaust gas along an exhaust gas circulation path from an output (e.g., discharged exhaust gas 60) to an input (e.g., intake exhaust gas 66) of the SEGR gas turbine system 52. In the illustrated embodiment, the SEGR gas turbine system 52 intakes the exhaust gas 66 into a compressor section having one or more compressors, thereby compressing the exhaust gas 66 for use in a combustor section along with an intake of an oxidant 68 and one or more fuels 70. The oxidant 68 may include ambient air, pure oxygen, oxygen-enriched air, oxygen-reduced air, oxygen-nitrogen mixtures, or any suitable oxidant that facilitates combustion of the fuel 70. The fuel 70 may include one or more gas fuels, liquid fuels, or any combination thereof. For example, the fuel 70 may include natural gas, liquefied natural gas (LNG), syngas, methane, ethane, propane, butane, naphtha, kerosene, diesel fuel, ethanol, methanol, biofuel, or any combination thereof.

The SEGR gas turbine system 52 mixes and combusts the exhaust gas 66, the oxidant 68, and the fuel 70 in the combustor section, thereby generating hot combustion gases or exhaust gas 60 to drive one or more turbine stages in a turbine section. In certain embodiments, each combustor in the combustor section includes one or more premix fuel nozzles, one or more diffusion fuel nozzles, or any combination thereof. For example, each premix fuel nozzle may be configured to mix the oxidant 68 and the fuel 70 internally within the fuel nozzle and/or partially upstream of the fuel nozzle, thereby injecting an oxidant-fuel mixture from the fuel nozzle into the combustion zone for a premixed combustion (e.g., a premixed flame). By further example, each diffusion fuel nozzle may be configured to isolate the flows of oxidant 68 and fuel 70 within the fuel nozzle, thereby separately injecting the oxidant 68 and the fuel 70 from the fuel nozzle into the combustion zone for diffusion combustion (e.g., a diffusion flame). In particular, the diffusion combustion provided by the diffusion fuel nozzles delays mixing of the oxidant 68 and the fuel 70 until the point of initial combustion, i.e., the flame region. In embodiments employing the diffusion fuel nozzles, the diffusion flame may provide increased flame stability, because the diffusion flame generally forms at the point of stoichiometry between the separate streams of oxidant 68 and fuel 70 (i.e., as the oxidant 68 and fuel 70 are mixing). In certain embodiments, one or more diluents (e.g., the exhaust gas 60, steam, nitrogen, or another inert gas) may be pre-mixed with the oxidant 68, the fuel 70, or both, in either the diffusion fuel nozzle or the premix fuel nozzle. In addition, one or more diluents (e.g., the exhaust gas 60, steam, nitrogen, or another inert gas) may be injected into the combustor at or downstream from the point of combustion within each combustor. The use of these diluents may help temper the flame (e.g., premix flame or diffusion flame), thereby helping to reduce NO_{X} emissions, such as nitrogen monoxide (NO) and nitrogen dioxide (NO₂). Regardless of the type of flame, the combustion produces hot combustion gases or exhaust gas 60 to drive one or more turbine stages. As each turbine stage is driven by the exhaust gas 60, the SEGR gas turbine system 52 generates a mechanical power 72 and/or an electrical power 74 (e.g., via an electrical generator). The system 52 also outputs the exhaust gas 60, and may further output water 64. Again, the water 64 may be a treated water, such as a desalinated water, which may be useful in a variety of applications on-site or off-site.

Exhaust extraction is also provided by the SEGR gas turbine system 52 using one or more extraction points 76. For example, the illustrated embodiment includes an exhaust gas (EG) supply system 78 having an exhaust gas (EG) extraction system 80 and an exhaust gas (EG) treatment system 82, which receive exhaust gas 42 from the extraction points 76, treat the exhaust gas 42, and then supply or distribute the exhaust gas 42 to various target systems. The target systems may include the EOR system 18 and/or other systems, such as a pipeline 86, a storage tank 88, or a carbon sequestration system 90. The EG extraction system 80 may include one or more conduits, valves, controls, and flow separations, which facilitate isolation of the exhaust gas 42 from the oxidant 68, the fuel 70, and other contaminants, while also controlling the temperature, pressure, and flow rate of the extracted exhaust gas 42. The EG treatment system 82 may include one or more heat exchangers (e.g., heat recovery units such as heat recovery steam generators, condensers, coolers, or heaters), catalyst systems (e.g., oxidation catalyst systems), particulate and/or water removal systems (e.g., gas dehydration units, inertial separators, coalescing filters, water impermeable filters, and other filters), chemical injection systems, solvent based treatment systems (e.g., absorbers, flash tanks, etc.), carbon capture systems, gas separation systems, gas purification systems, and/or a solvent based treatment system, exhaust gas compressors, any combination thereof. These subsystems of the EG treatment system 82 enable control of the temperature, pressure, flow rate, moisture content (e.g., amount of water removal), particulate content (e.g., amount of particulate removal), and gas composition (e.g., percentage of CO₂, N₂, etc.).

The extracted exhaust gas 42 is treated by one or more subsystems of the EG treatment system 82, depending on the target system. For example, the EG treatment system 82 may direct all or part of the exhaust gas 42 through a carbon capture system, a gas separation system, a gas purification system, and/or a solvent based treatment system, which is controlled to separate and purify a carbonaceous gas (e.g., carbon dioxide) 92 and/or nitrogen (N₂) 94 for use in the various target systems. For example, embodiments of the EG treatment system 82 may perform gas separation and purification to produce a plurality of different streams 95 of exhaust gas 42, such as a first stream 96, a second stream 97, and a third stream 98. The first stream 96 may have a first composition that is rich in carbon dioxide and/or lean in nitrogen (e.g., a CO₂ rich, N₂ lean stream). The second stream 97 may have a second composition that has intermediate concentration levels of carbon dioxide and/or nitrogen (e.g., intermediate concentration CO₂, N₂ stream). The third stream 98 may have a third composition that is lean in carbon dioxide and/or rich in nitrogen (e.g., a CO₂ lean, N₂ rich stream). Each stream 95 (e.g., 96, 97, and 98) may include a gas dehydration unit, a filter, a gas compressor, or any combination thereof, to facilitate delivery of the stream 95 to a target system. In certain embodiments, the CO₂ rich, N₂ lean stream 96 may have a CO₂ purity or concentration level of greater than approximately 70, 75, 80, 85, 90, 95, 96, 97, 98, or 99 percent by volume, and a N₂ purity or concentration level of less than approximately 1, 2, 3, 4, 5, 10, 15, 20, 25, or 30 percent by volume. In contrast, the CO₂ lean, N₂ rich stream 98 may have a CO₂ purity or concentration level of less than approximately 1, 2, 3, 4, 5, 10, 15, 20, 25, or 30 percent by volume, and a N₂ purity or concentration level of greater than approximately 70, 75, 80, 85, 90, 95, 96, 97, 98, or 99 percent by volume. The intermediate concentration CO₂, N₂ stream 97 may have a CO₂ purity or concentration level and/or a N₂ purity or concentration level of between approximately 30 to 70, 35 to 65, 40 to 60, or 45 to 55 percent by volume. Although the foregoing ranges are merely non-limiting examples, the CO₂ rich, N₂ lean stream 96 and the CO₂ lean, N₂ rich stream 98 may be particularly well suited for use with the EOR system 18 and the other systems 84. However, any of these rich, lean, or intermediate concentration CO₂ streams 95 may be used, alone or in various combinations, with the EOR system 18 and the other systems 84. For example, the EOR system 18 and the other systems 84 (e.g., the pipeline 86, storage tank 88, and the carbon sequestration system 90) each may receive one or more CO₂ rich, N₂ lean streams 96, one or more CO₂ lean, N₂ rich streams 98, one or more intermediate concentration CO₂, N₂ streams 97, and one or more untreated exhaust gas 42 streams (i.e., bypassing the EG treatment system 82).

The EG extraction system 80 extracts the exhaust gas 42 at one or more extraction points 76 along the compressor section, the combustor section, and/or the turbine section, such that the exhaust gas 42 may be used in the EOR system 18 and other systems 84 at suitable temperatures and pressures. The EG extraction system 80 and/or the EG treatment system 82 also may circulate fluid flows (e.g., exhaust gas 42) to and from the EG processing system 54. For example, a portion of the exhaust gas 42 passing through the EG processing system 54 may be extracted by the EG extraction system 80 for use in the EOR system 18 and the other systems 84. In certain embodiments, the EG supply system 78 and the EG processing system 54 may be independent or integral with one another, and thus may use independent or common subsystems. For example, the EG treatment system 82 may be used by both the EG supply system 78 and the EG processing system 54. Exhaust gas 42 extracted from the EG processing system 54 may undergo multiple stages of gas treatment, such as one or more stages of gas treatment in the EG processing system 54 followed by one or more additional stages of gas treatment in the EG treatment system 82.

At each extraction point 76, the extracted exhaust gas 42 may be substantially free of oxidant 68 and fuel 70 (e.g., unburnt fuel or hydrocarbons) due to substantially stoichiometric combustion and/or gas treatment in the EG processing system 54. Furthermore, depending on the target system, the extracted exhaust gas 42 may undergo further treatment in the EG treatment system 82 of the EG supply system 78, thereby further reducing any residual oxidant 68, fuel 70, or other undesirable products of combustion. For example, either before or after treatment in the EG treatment system 82, the extracted exhaust gas 42 may have less than 1, 2, 3, 4, or 5 percent by volume of oxidant (e.g., oxygen), unburnt fuel or hydrocarbons (e.g., HCs), nitrogen oxides (e.g., NO_{X}), carbon monoxide (CO), sulfur oxides (e.g., SO_{X}), hydrogen, and other products of incomplete combustion. By further example, either before or after treatment in the EG treatment system 82, the extracted exhaust gas 42 may have less than approximately 10, 20, 30, 40, 50, 60, 70, 80, 90, 100, 200, 300, 400, 500, 1000, 2000, 3000, 4000, or 5000 parts per million by volume (ppmv) of oxidant (e.g., oxygen), unburnt fuel or hydrocarbons (e.g., HCs), nitrogen oxides (e.g., NO_{X}), carbon monoxide (CO), sulfur oxides (e.g., SO_{X}), hydrogen, and other products of incomplete combustion. Thus, the exhaust gas 42 is particularly well suited for use with the EOR system 18.

The EGR operation of the turbine system 52 specifically enables the exhaust extraction at a multitude of locations 76. For example, the compressor section of the system 52 may be used to compress the exhaust gas 66 without any oxidant 68 (i.e., only compression of the exhaust gas 66), such that a substantially oxygen-free exhaust gas 42 may be extracted from the compressor section and/or the combustor section prior to entry of the oxidant 68 and the fuel 70. The extraction points 76 may be located at interstage ports between adjacent compressor stages, at ports along the compressor discharge casing, at ports along each combustor in the combustor section, or any combination thereof. In certain embodiments, the exhaust gas 66 may not mix with the oxidant 68 and fuel 70 until it reaches the head end portion and/or fuel nozzles of each combustor in the combustor section. Furthermore, one or more flow separators (e.g., walls, dividers, baffles, or the like) may be used to isolate the oxidant 68 and the fuel 70 from the extraction points 76. With these flow separators, the extraction points 76 may be disposed directly along a wall of each combustor in the combustor section.

Once the exhaust gas 66, oxidant 68, and fuel 70 flow through the head end portion (e.g., through fuel nozzles) into the combustion portion (e.g., combustion chamber) of each combustor, the SEGR gas turbine system 52 is controlled to provide a substantially stoichiometric combustion of the exhaust gas 66, oxidant 68, and fuel 70. For example, the system 52 may maintain an equivalence ratio of approximately 0.95 to approximately 1.05. As a result, the products of combustion of the mixture of exhaust gas 66, oxidant 68, and fuel 70 in each combustor is substantially free of oxygen and unburnt fuel. Thus, the products of combustion (or exhaust gas) may be extracted from the turbine section of the SEGR gas turbine system 52 for use as the exhaust gas 42 routed to the EOR system 18. Along the turbine section, the extraction points 76 may be located at any turbine stage, such as interstage ports between adjacent turbine stages. Thus, using any of the foregoing extraction points 76, the turbine-based service system 14 may generate, extract, and deliver the exhaust gas 42 to the hydrocarbon production system 12 (e.g., the EOR system 18) for use in the production of oil/gas 48 from the subterranean reservoir 20.

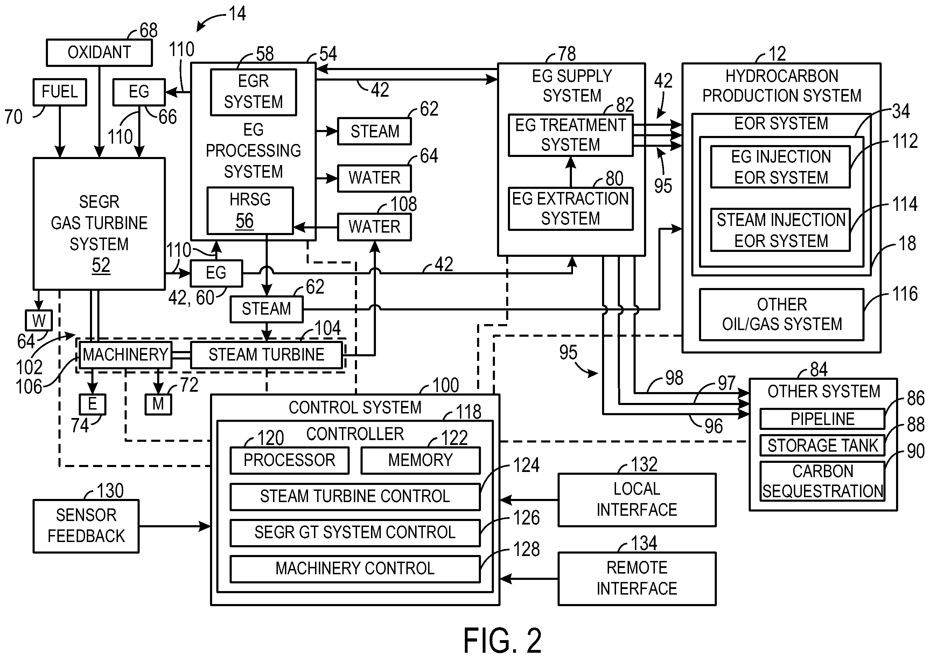

FIG. 2 is a diagram of an embodiment of the system 10 of FIG. 1, illustrating a control system 100 coupled to the turbine-based service system 14 and the hydrocarbon production system 12. In the illustrated embodiment, the turbine-based service system 14 includes a combined cycle system 102, which includes the SEGR gas turbine system 52 as a topping cycle, a steam turbine 104 as a bottoming cycle, and the HRSG 56 to recover heat from the exhaust gas 60 to generate the steam 62 for driving the steam turbine 104. Again, the SEGR gas turbine system 52 receives, mixes, and stoichiometrically combusts the exhaust gas 66, the oxidant 68, and the fuel 70 (e.g., premix and/or diffusion flames), thereby producing the exhaust gas 60, the mechanical power 72, the electrical power 74, and/or the water 64. For example, the SEGR gas turbine system 52 may drive one or more loads or machinery 106, such as an electrical generator, an oxidant compressor (e.g., a main air compressor), a gear box, a pump, equipment of the hydrocarbon production system 12, or any combination thereof. In some embodiments, the machinery 106 may include other drives, such as electrical motors or steam turbines (e.g., the steam turbine 104), in tandem with the SEGR gas turbine system 52. Accordingly, an output of the machinery 106 driven by the SEGR gas turbines system 52 (and any additional drives) may include the mechanical power 72 and the electrical power 74. The mechanical power 72 and/or the electrical power 74 may be used on-site for powering the hydrocarbon production system 12, the electrical power 74 may be distributed to the power grid, or any combination thereof. The output of the machinery 106 also may include a compressed fluid, such as a compressed oxidant 68 (e.g., air or oxygen), for intake into the combustion section of the SEGR gas turbine system 52. Each of these outputs (e.g., the exhaust gas 60, the mechanical power 72, the electrical power 74, and/or the water 64) may be considered a service of the turbine-based service system 14.

The SEGR gas turbine system 52 produces the exhaust gas 42, 60, which may be substantially free of oxygen, and routes this exhaust gas 42, 60 to the EG processing system 54 and/or the EG supply system 78. The EG supply system 78 may treat and delivery the exhaust gas 42 (e.g., streams 95) to the hydrocarbon production system 12 and/or the other systems 84. As discussed above, the EG processing system 54 may include the HRSG 56 and the EGR system 58. The HRSG 56 may include one or more heat exchangers, condensers, and various heat recovery equipment, which may be used to recover or transfer heat from the exhaust gas 60 to water 108 to generate the steam 62 for driving the steam turbine 104. Similar to the SEGR gas turbine system 52, the steam turbine 104 may drive one or more loads or machinery 106, thereby generating the mechanical power 72 and the electrical power 74. In the illustrated embodiment, the SEGR gas turbine system 52 and the steam turbine 104 are arranged in tandem to drive the same machinery 106. However, in other embodiments, the SEGR gas turbine system 52 and the steam turbine 104 may separately drive different machinery 106 to independently generate mechanical power 72 and/or electrical power 74. As the steam turbine 104 is driven by the steam 62 from the HRSG 56, the steam 62 gradually decreases in temperature and pressure. Accordingly, the steam turbine 104 recirculates the used steam 62 and/or water 108 back into the HRSG 56 for additional steam generation via heat recovery from the exhaust gas 60. In addition to steam generation, the HRSG 56, the EGR system 58, and/or another portion of the EG processing system 54 may produce the water 64, the exhaust gas 42 for use with the hydrocarbon production system 12, and the exhaust gas 66 for use as an input into the SEGR gas turbine system 52. For example, the water 64 may be a treated water 64, such as a desalinated water for use in other applications. The desalinated water may be particularly useful in regions of low water availability. Regarding the exhaust gas 60, embodiments of the EG processing system 54 may be configured to recirculate the exhaust gas 60 through the EGR system 58 with or without passing the exhaust gas 60 through the HRSG 56.

In the illustrated embodiment, the SEGR gas turbine system 52 has an exhaust recirculation path 110, which extends from an exhaust outlet to an exhaust inlet of the system 52. Along the path 110, the exhaust gas 60 passes through the EG processing system 54, which includes the HRSG 56 and the EGR system 58 in the illustrated embodiment. The EGR system 58 may include one or more conduits, valves, blowers, gas treatment systems (e.g., filters, particulate removal units, gas separation units, gas purification units, heat exchangers, heat recovery units such as heat recovery steam generators, moisture removal units, catalyst units, chemical injection units, or any combination thereof) in series and/or parallel arrangements along the path 110. In other words, the EGR system 58 may include any flow control components, pressure control components, temperature control components, moisture control components, and gas composition control components along the exhaust recirculation path 110 between the exhaust outlet and the exhaust inlet of the system 52. Accordingly, in embodiments with the HRSG 56 along the path 110, the HRSG 56 may be considered a component of the EGR system 58. However, in certain embodiments, the HRSG 56 may be disposed along an exhaust path independent from the exhaust recirculation path 110. Regardless of whether the HRSG 56 is along a separate path or a common path with the EGR system 58, the HRSG 56 and the EGR system 58 intake the exhaust gas 60 and output either the recirculated exhaust gas 66, the exhaust gas 42 for use with the EG supply system 78 (e.g., for the hydrocarbon production system 12 and/or other systems 84), or another output of exhaust gas. Again, the SEGR gas turbine system 52 intakes, mixes, and stoichiometrically combusts the exhaust gas 66, the oxidant 68, and the fuel 70 (e.g., premixed and/or diffusion flames) to produce a substantially oxygen-free and fuel-free exhaust gas 60 for distribution to the EG processing system 54, the hydrocarbon production system 12, or other systems 84.

As noted above with reference to FIG. 1, the hydrocarbon production system 12 may include a variety of equipment to facilitate the recovery or production of oil/gas 48 from a subterranean reservoir 20 through an oil/gas well 26. For example, the hydrocarbon production system 12 may include the EOR system 18 having the fluid injection system 34. In the illustrated embodiment, the fluid injection system 34 includes an exhaust gas injection EOR system 112 and a steam injection EOR system 114. Although the fluid injection system 34 may receive fluids from a variety of sources, the illustrated embodiment may receive the exhaust gas 42 and the steam 62 from the turbine-based service system 14. The exhaust gas 42 and/or the steam 62 produced by the turbine-based service system 14 also may be routed to the hydrocarbon production system 12 for use in other oil/gas systems 116.

The quantity, quality, and flow of the exhaust gas 42 and/or the steam 62 may be controlled by the control system 100. The control system 100 may be dedicated entirely to the turbine-based service system 14, or the control system 100 may optionally also provide control (or at least some data to facilitate control) for the hydrocarbon production system 12 and/or other systems 84. In the illustrated embodiment, the control system 100 includes a controller 118 having a processor 120, a memory 122, a steam turbine control 124, a SEGR gas turbine system control 126, and a machinery control 128. The processor 120 may include a single processor or two or more redundant processors, such as triple redundant processors for control of the turbine-based service system 14. The memory 122 may include volatile and/or non-volatile memory. For example, the memory 122 may include one or more hard drives, flash memory, read-only memory, random access memory, or any combination thereof. The controls 124, 126, and 128 may include software and/or hardware controls. For example, the controls 124, 126, and 128 may include various instructions or code stored on the memory 122 and executable by the processor 120. The control 124 is configured to control operation of the steam turbine 104, the SEGR gas turbine system control 126 is configured to control the system 52, and the machinery control 128 is configured to control the machinery 106. Thus, the controller 118 (e.g., controls 124, 126, and 128) may be configured to coordinate various sub-systems of the turbine-based service system 14 to provide a suitable stream of the exhaust gas 42 to the hydrocarbon production system 12.

In certain embodiments of the control system 100, each element (e.g., system, subsystem, and component) illustrated in the drawings or described herein includes (e.g., directly within, upstream, or downstream of such element) one or more industrial control features, such as sensors and control devices, which are communicatively coupled with one another over an industrial control network along with the controller 118. For example, the control devices associated with each element may include a dedicated device controller (e.g., including a processor, memory, and control instructions), one or more actuators, valves, switches, and industrial control equipment, which enable control based on sensor feedback 130, control signals from the controller 118, control signals from a user, or any combination thereof. Thus, any of the control functionality described herein may be implemented with control instructions stored and/or executable by the controller 118, dedicated device controllers associated with each element, or a combination thereof.

In order to facilitate such control functionality, the control system 100 includes one or more sensors distributed throughout the system 10 to obtain the sensor feedback 130 for use in execution of the various controls, e.g., the controls 124, 126, and 128. For example, the sensor feedback 130 may be obtained from sensors distributed throughout the SEGR gas turbine system 52, the machinery 106, the EG processing system 54, the steam turbine 104, the hydrocarbon production system 12, or any other components throughout the turbine-based service system 14 or the hydrocarbon production system 12. For example, the sensor feedback 130 may include temperature feedback, pressure feedback, flow rate feedback, flame temperature feedback, combustion dynamics feedback, intake oxidant composition feedback, intake fuel composition feedback, exhaust composition feedback, the output level of mechanical power 72, the output level of electrical power 74, the output quantity of the exhaust gas 42, 60, the output quantity or quality of the water 64, or any combination thereof. For example, the sensor feedback 130 may include a composition of the exhaust gas 42, 60 to facilitate stoichiometric combustion in the SEGR gas turbine system 52. For example, the sensor feedback 130 may include feedback from one or more intake oxidant sensors along an oxidant supply path of the oxidant 68, one or more intake fuel sensors along a fuel supply path of the fuel 70, and one or more exhaust emissions sensors disposed along the exhaust recirculation path 110 and/or within the SEGR gas turbine system 52. The intake oxidant sensors, intake fuel sensors, and exhaust emissions sensors may include temperature sensors, pressure sensors, flow rate sensors, and composition sensors. The emissions sensors may includes sensors for nitrogen oxides (e.g., NO_{X} sensors), carbon oxides (e.g., CO sensors and CO₂ sensors), sulfur oxides (e.g., SO_{X} sensors), hydrogen (e.g., H₂ sensors), oxygen (e.g., O₂ sensors), unburnt hydrocarbons (e.g., HC sensors), or other products of incomplete combustion, or any combination thereof.

Using this feedback 130, the control system 100 may adjust (e.g., increase, decrease, or maintain) the intake flow of exhaust gas 66, oxidant 68, and/or fuel 70 into the SEGR gas turbine system 52 (among other operational parameters) to maintain the equivalence ratio within a suitable range, e.g., between approximately 0.95 to approximately 1.05, between approximately 0.95 to approximately 1.0, between approximately 1.0 to approximately 1.05, or substantially at 1.0. For example, the control system 100 may analyze the feedback 130 to monitor the exhaust emissions (e.g., concentration levels of nitrogen oxides, carbon oxides such as CO and CO₂, sulfur oxides, hydrogen, oxygen, unburnt hydrocarbons, and other products of incomplete combustion) and/or determine the equivalence ratio, and then control one or more components to adjust the exhaust emissions (e.g., concentration levels in the exhaust gas 42) and/or the equivalence ratio. The controlled components may include any of the components illustrated and described with reference to the drawings, including but not limited to, valves along the supply paths for the oxidant 68, the fuel 70, and the exhaust gas 66; an oxidant compressor, a fuel pump, or any components in the EG processing system 54; any components of the SEGR gas turbine system 52, or any combination thereof. The controlled components may adjust (e.g., increase, decrease, or maintain) the flow rates, temperatures, pressures, or percentages (e.g., equivalence ratio) of the oxidant 68, the fuel 70, and the exhaust gas 66 that combust within the SEGR gas turbine system 52. The controlled components also may include one or more gas treatment systems, such as catalyst units (e.g., oxidation catalyst units), supplies for the catalyst units (e.g., oxidation fuel, heat, electricity, etc.), gas purification and/or separation units (e.g., solvent based separators, absorbers, flash tanks, etc.), and filtration units. The gas treatment systems may help reduce various exhaust emissions along the exhaust recirculation path 110, a vent path (e.g., exhausted into the atmosphere), or an extraction path to the EG supply system 78.

In certain embodiments, the control system 100 may analyze the feedback 130 and control one or more components to maintain or reduce emissions levels (e.g., concentration levels in the exhaust gas 42, 60, 95) to a target range, such as less than approximately 10, 20, 30, 40, 50, 100, 200, 300, 400, 500, 1000, 2000, 3000, 4000, 5000, or 10000 parts per million by volume (ppmv). These target ranges may be the same or different for each of the exhaust emissions, e.g., concentration levels of nitrogen oxides, carbon monoxide, sulfur oxides, hydrogen, oxygen, unburnt hydrocarbons, and other products of incomplete combustion. For example, depending on the equivalence ratio, the control system 100 may selectively control exhaust emissions (e.g., concentration levels) of oxidant (e.g., oxygen) within a target range of less than approximately 10, 20, 30, 40, 50, 60, 70, 80, 90, 100, 250, 500, 750, or 1000 ppmv; carbon monoxide (CO) within a target range of less than approximately 20, 50, 100, 200, 500, 1000, 2500, or 5000 ppmv; and nitrogen oxides (NOx) within a target range of less than approximately 50, 100, 200, 300, 400, or 500 ppmv. In certain embodiments operating with a substantially stoichiometric equivalence ratio, the control system 100 may selectively control exhaust emissions (e.g., concentration levels) of oxidant (e.g., oxygen) within a target range of less than approximately 10, 20, 30, 40, 50, 60, 70, 80, 90, or 100 ppmv; and carbon monoxide (CO) within a target range of less than approximately 500, 1000, 2000, 3000, 4000, or 5000 ppmv. In certain embodiments operating with a fuel-lean equivalence ratio (e.g., between approximately 0.95 to 1.0), the control system 100 may selectively control exhaust emissions (e.g., concentration levels) of oxidant (e.g., oxygen) within a target range of less than approximately 500, 600, 700, 800, 900, 1000, 1100, 1200, 1300, 1400, or 1500 ppmv; carbon monoxide (CO) within a target range of less than approximately 10, 20, 30, 40, 50, 60, 70, 80, 90, 100, 150, or 200 ppmv; and nitrogen oxides (e.g., NOx) within a target range of less than approximately 50, 100, 150, 200, 250, 300, 350, or 400 ppmv. The foregoing target ranges are merely examples, and are not intended to limit the scope of the disclosed embodiments.

The control system 100 also may be coupled to a local interface 132 and a remote interface 134. For example, the local interface 132 may include a computer workstation disposed on-site at the turbine-based service system 14 and/or the hydrocarbon production system 12. In contrast, the remote interface 134 may include a computer workstation disposed off-site from the turbine-based service system 14 and the hydrocarbon production system 12, such as through an internet connection. These interfaces 132 and 134 facilitate monitoring and control of the turbine-based service system 14, such as through one or more graphical displays of sensor feedback 130, operational parameters, and so forth.

Again, as noted above, the controller 118 includes a variety of controls 124, 126, and 128 to facilitate control of the turbine-based service system 14. The steam turbine control 124 may receive the sensor feedback 130 and output control commands to facilitate operation of the steam turbine 104. For example, the steam turbine control 124 may receive the sensor feedback 130 from the HRSG 56, the machinery 106, temperature and pressure sensors along a path of the steam 62, temperature and pressure sensors along a path of the water 108, and various sensors indicative of the mechanical power 72 and the electrical power 74. Likewise, the SEGR gas turbine system control 126 may receive sensor feedback 130 from one or more sensors disposed along the SEGR gas turbine system 52, the machinery 106, the EG processing system 54, or any combination thereof. For example, the sensor feedback 130 may be obtained from temperature sensors, pressure sensors, clearance sensors, vibration sensors, flame sensors, fuel composition sensors, exhaust gas composition sensors, or any combination thereof, disposed within or external to the SEGR gas turbine system 52. Finally, the machinery control 128 may receive sensor feedback 130 from various sensors associated with the mechanical power 72 and the electrical power 74, as well as sensors disposed within the machinery 106. Each of these controls 124, 126, and 128 uses the sensor feedback 130 to improve operation of the turbine-based service system 14.

In the illustrated embodiment, the SEGR gas turbine system control 126 may execute instructions to control the quantity and quality of the exhaust gas 42, 60, 95 in the EG processing system 54, the EG supply system 78, the hydrocarbon production system 12, and/or the other systems 84. For example, the SEGR gas turbine system control 126 may maintain a level of oxidant (e.g., oxygen) and/or unburnt fuel in the exhaust gas 60 below a threshold suitable for use with the exhaust gas injection EOR system 112. In certain embodiments, the threshold levels may be less than 1, 2, 3, 4, or 5 percent of oxidant (e.g., oxygen) and/or unburnt fuel by volume of the exhaust gas 42, 60; or the threshold levels of oxidant (e.g., oxygen) and/or unburnt fuel (and other exhaust emissions) may be less than approximately 10, 20, 30, 40, 50, 60, 70, 80, 90, 100, 200, 300, 400, 500, 1000, 2000, 3000, 4000, or 5000 parts per million by volume (ppmv) in the exhaust gas 42, 60. By further example, in order to achieve these low levels of oxidant (e.g., oxygen) and/or unburnt fuel, the SEGR gas turbine system control 126 may maintain an equivalence ratio for combustion in the SEGR gas turbine system 52 between approximately 0.95 and approximately 1.05. The SEGR gas turbine system control 126 also may control the EG extraction system 80 and the EG treatment system 82 to maintain the temperature, pressure, flow rate, and gas composition of the exhaust gas 42, 60, 95 within suitable ranges for the exhaust gas injection EOR system 112, the pipeline 86, the storage tank 88, and the carbon sequestration system 90. As discussed above, the EG treatment system 82 may be controlled to purify and/or separate the exhaust gas 42 into one or more gas streams 95, such as the CO₂ rich, N₂ lean stream 96, the intermediate concentration CO₂, N₂ stream 97, and the CO₂ lean, N₂ rich stream 98. In addition to controls for the exhaust gas 42, 60, and 95, the controls 124, 126, and 128 may execute one or more instructions to maintain the mechanical power 72 within a suitable power range, or maintain the electrical power 74 within a suitable frequency and power range.

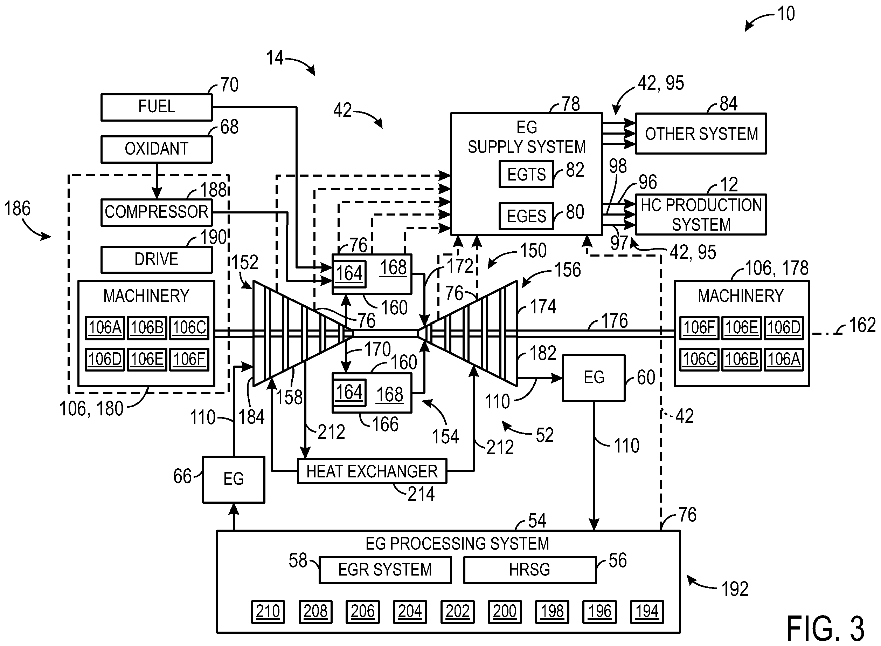

FIG. 3 is a diagram of embodiment of the system 10, further illustrating details of the SEGR gas turbine system 52 for use with the hydrocarbon production system 12 and/or other systems 84. In the illustrated embodiment, the SEGR gas turbine system 52 includes a gas turbine engine 150 coupled to the EG processing system 54. The illustrated gas turbine engine 150 includes a compressor section 152, a combustor section 154, and an expander section or turbine section 156. The compressor section 152 includes one or more exhaust gas compressors or compressor stages 158, such as 1 to 20 stages of rotary compressor blades disposed in a series arrangement. Likewise, the combustor section 154 includes one or more combustors 160, such as 1 to 20 combustors 160 distributed circumferentially about a rotational axis 162 of the SEGR gas turbine system 52. Furthermore, each combustor 160 may include one or more fuel nozzles 164 configured to inject the exhaust gas 66, the oxidant 68, and/or the fuel 70. For example, a head end portion 166 of each combustor 160 may house 1, 2, 3, 4, 5, 6, or more fuel nozzles 164, which may inject streams or mixtures of the exhaust gas 66, the oxidant 68, and/or the fuel 70 into a combustion portion 168 (e.g., combustion chamber) of the combustor 160.

The fuel nozzles 164 may include any combination of premix fuel nozzles 164 (e.g., configured to premix the oxidant 68 and fuel 70 for generation of an oxidant/fuel premix flame) and/or diffusion fuel nozzles 164 (e.g., configured to inject separate flows of the oxidant 68 and fuel 70 for generation of an oxidant/fuel diffusion flame). Embodiments of the premix fuel nozzles 164 may include swirl vanes, mixing chambers, or other features to internally mix the oxidant 68 and fuel 70 within the nozzles 164, prior to injection and combustion in the combustion chamber 168. The premix fuel nozzles 164 also may receive at least some partially mixed oxidant 68 and fuel 70. In certain embodiments, each diffusion fuel nozzle 164 may isolate flows of the oxidant 68 and the fuel 70 until the point of injection, while also isolating flows of one or more diluents (e.g., the exhaust gas 66, steam, nitrogen, or another inert gas) until the point of injection. In other embodiments, each diffusion fuel nozzle 164 may isolate flows of the oxidant 68 and the fuel 70 until the point of injection, while partially mixing one or more diluents (e.g., the exhaust gas 66, steam, nitrogen, or another inert gas) with the oxidant 68 and/or the fuel 70 prior to the point of injection. In addition, one or more diluents (e.g., the exhaust gas 66, steam, nitrogen, or another inert gas) may be injected into the combustor (e.g., into the hot products of combustion) either at or downstream from the combustion zone, thereby helping to reduce the temperature of the hot products of combustion and reduce emissions of NO_{X} (e.g., NO and NO₂). Regardless of the type of fuel nozzle 164, the SEGR gas turbine system 52 may be controlled to provide substantially stoichiometric combustion of the oxidant 68 and fuel 70.

In diffusion combustion embodiments using the diffusion fuel nozzles 164, the fuel 70 and oxidant 68 generally do not mix upstream from the diffusion flame, but rather the fuel 70 and oxidant 68 mix and react directly at the flame surface and/or the flame surface exists at the location of mixing between the fuel 70 and oxidant 68. In particular, the fuel 70 and oxidant 68 separately approach the flame surface (or diffusion boundary/interface), and then diffuse (e.g., via molecular and viscous diffusion) along the flame surface (or diffusion boundary/interface) to generate the diffusion flame. It is noteworthy that the fuel 70 and oxidant 68 may be at a substantially stoichiometric ratio along this flame surface (or diffusion boundary/interface), which may result in a greater flame temperature (e.g., a peak flame temperature) along this flame surface. The stoichiometric fuel/oxidant ratio generally results in a greater flame temperature (e.g., a peak flame temperature), as compared with a fuel-lean or fuel-rich fuel/oxidant ratio. As a result, the diffusion flame may be substantially more stable than a premix flame, because the diffusion of fuel 70 and oxidant 68 helps to maintain a stoichiometric ratio (and greater temperature) along the flame surface. Although greater flame temperatures can also lead to greater exhaust emissions, such as NO_{X} emissions, the disclosed embodiments use one or more diluents to help control the temperature and emissions while still avoiding any premixing of the fuel 70 and oxidant 68. For example, the disclosed embodiments may introduce one or more diluents separate from the fuel 70 and oxidant 68 (e.g., after the point of combustion and/or downstream from the diffusion flame), thereby helping to reduce the temperature and reduce the emissions (e.g., NO_{X} emissions) produced by the diffusion flame.

In operation, as illustrated, the compressor section 152 receives and compresses the exhaust gas 66 from the EG processing system 54, and outputs a compressed exhaust gas 170 to each of the combustors 160 in the combustor section 154. Upon combustion of the fuel 60, oxidant 68, and exhaust gas 170 within each combustor 160, additional exhaust gas or products of combustion 172 (i.e., combustion gas) is routed into the turbine section 156. Similar to the compressor section 152, the turbine section 156 includes one or more turbines or turbine stages 174, which may include a series of rotary turbine blades. These turbine blades are then driven by the products of combustion 172 generated in the combustor section 154, thereby driving rotation of a shaft 176 coupled to the machinery 106. Again, the machinery 106 may include a variety of equipment coupled to either end of the SEGR gas turbine system 52, such as machinery 106, 178 coupled to the turbine section 156 and/or machinery 106, 180 coupled to the compressor section 152. In certain embodiments, the machinery 106, 178, 180 may include one or more electrical generators, oxidant compressors for the oxidant 68, fuel pumps for the fuel 70, gear boxes, or additional drives (e.g. steam turbine 104, electrical motor, etc.) coupled to the SEGR gas turbine system 52. Non-limiting examples are discussed in further detail below with reference to TABLE 1. As illustrated, the turbine section 156 outputs the exhaust gas 60 to recirculate along the exhaust recirculation path 110 from an exhaust outlet 182 of the turbine section 156 to an exhaust inlet 184 into the compressor section 152. Along the exhaust recirculation path 110, the exhaust gas 60 passes through the EG processing system 54 (e.g., the HRSG 56 and/or the EGR system 58) as discussed in detail above.

Again, each combustor 160 in the combustor section 154 receives, mixes, and stoichiometrically combusts the compressed exhaust gas 170, the oxidant 68, and the fuel 70 to produce the additional exhaust gas or products of combustion 172 to drive the turbine section 156. In certain embodiments, the oxidant 68 is compressed by an oxidant compression system 186, such as a main oxidant compression (MOC) system (e.g., a main air compression (MAC) system) having one or more oxidant compressors (MOCs). The oxidant compression system 186 includes an oxidant compressor 188 coupled to a drive 190. For example, the drive 190 may include an electric motor, a combustion engine, or any combination thereof. In certain embodiments, the drive 190 may be a turbine engine, such as the gas turbine engine 150. Accordingly, the oxidant compression system 186 may be an integral part of the machinery 106. In other words, the compressor 188 may be directly or indirectly driven by the mechanical power 72 supplied by the shaft 176 of the gas turbine engine 150. In such an embodiment, the drive 190 may be excluded, because the compressor 188 relies on the power output from the turbine engine 150. However, in certain embodiments employing more than one oxidant compressor is employed, a first oxidant compressor (e.g., a low pressure (LP) oxidant compressor) may be driven by the drive 190 while the shaft 176 drives a second oxidant compressor (e.g., a high pressure (HP) oxidant compressor), or vice versa. For example, in another embodiment, the HP MOC is driven by the drive 190 and the LP oxidant compressor is driven by the shaft 176. In the illustrated embodiment, the oxidant compression system 186 is separate from the machinery 106. In each of these embodiments, the compression system 186 compresses and supplies the oxidant 68 to the fuel nozzles 164 and the combustors 160. Accordingly, some or all of the machinery 106, 178, 180 may be configured to increase the operational efficiency of the compression system 186 (e.g., the compressor 188 and/or additional compressors).

The variety of components of the machinery 106, indicated by element numbers 106A, 106B, 106C, 106D, 106E, and 106F, may be disposed along the line of the shaft 176 and/or parallel to the line of the shaft 176 in one or more series arrangements, parallel arrangements, or any combination of series and parallel arrangements. For example, the machinery 106, 178, 180 (e.g., 106A through 106F) may include any series and/or parallel arrangement, in any order, of: one or more gearboxes (e.g., parallel shaft, epicyclic gearboxes), one or more compressors (e.g., oxidant compressors, booster compressors such as EG booster compressors), one or more power generation units (e.g., electrical generators), one or more drives (e.g., steam turbine engines, electrical motors), heat exchange units (e.g., direct or indirect heat exchangers), clutches, or any combination thereof. The compressors may include axial compressors, radial or centrifugal compressors, or any combination thereof, each having one or more compression stages. Regarding the heat exchangers, direct heat exchangers may include spray coolers (e.g., spray intercoolers), which inject a liquid spray into a gas flow (e.g., oxidant flow) for direct cooling of the gas flow. Indirect heat exchangers may include at least one wall (e.g., a shell and tube heat exchanger) separating first and second flows, such as a fluid flow (e.g., oxidant flow) separated from a coolant flow (e.g., water, air, refrigerant, or any other liquid or gas coolant), wherein the coolant flow transfers heat from the fluid flow without any direct contact. Examples of indirect heat exchangers include intercooler heat exchangers and heat recovery units, such as heat recovery steam generators. The heat exchangers also may include heaters. As discussed in further detail below, each of these machinery components may be used in various combinations as indicated by the non-limiting examples set forth in TABLE 1.

Generally, the machinery 106, 178, 180 may be configured to increase the efficiency of the compression system 186 by, for example, adjusting operational speeds of one or more oxidant compressors in the system 186, facilitating compression of the oxidant 68 through cooling, and/or extraction of surplus power. The disclosed embodiments are intended to include any and all permutations of the foregoing components in the machinery 106, 178, 180 in series and parallel arrangements, wherein one, more than one, all, or none of the components derive power from the shaft 176. As illustrated below, TABLE 1 depicts some non-limiting examples of arrangements of the machinery 106, 178, 180 disposed proximate and/or coupled to the compressor and turbine sections 152, 156.

**TABLE 1**

| **106A** | **106B** | **106C** | **106D** | **106E** | **106F** |
|---|---|---|---|---|---|
| MOC | GEN | | | | |
| MOC | GBX | GEN | | | |
| LP | HP | GEN | | | |
| MOC | MOC | | | | |
| HP | GBX | LP | GEN | | |
| MOC | | MOC | | | |
| MOC | GBX | GEN | | | |
| MOC | | | | | |
| HP | GBX | GEN | LP | | |
| MOC | | | MOC | | |
| MOC | GBX | GEN | | | |
| MOC | GBX | DRV | | | |
| DRV | GBX | LP | HP | GBX | GEN |
| | | MOC | MOC | | |
| DRV | GBX | HP | LP | GEN | |
| | | MOC | MOC | | |
| HP | GBX | LP | GEN | | |
| MOC | CLR | MOC | | | |
| HP | GBX | LP | GBX | GEN | |
| MOC | CLR | MOC | | | |
| HP | GBX | LP | GEN | | |
| MOC | HTR | MOC | | | |
| | STGN | | | | |
| MOC | GEN | DRV | | | |
| MOC | DRV | GEN | | | |
| DRV | MOC | GEN | | | |
| DRV | CLU | MOC | GEN | | |
| DRV | CLU | MOC | GBX | GEN | |

As illustrated above in TABLE 1, a cooling unit is represented as CLR, a clutch is represented as CLU, a drive is represented by DRV, a gearbox is represented as GBX, a generator is represented by GEN, a heating unit is represented by HTR, a main oxidant compressor unit is represented by MOC, with low pressure and high pressure variants being represented as LP MOC and HP MOC, respectively, and a steam generator unit is represented as STGN. Although TABLE 1 illustrates the machinery 106, 178, 180 in sequence toward the compressor section 152 or the turbine section 156, TABLE 1 is also intended to cover the reverse sequence of the machinery 106, 178, 180. In TABLE 1, any cell including two or more components is intended to cover a parallel arrangement of the components. TABLE 1 is not intended to exclude any non-illustrated permutations of the machinery 106, 178, 180. These components of the machinery 106, 178, 180 may enable feedback control of temperature, pressure, and flow rate of the oxidant 68 sent to the gas turbine engine 150. As discussed in further detail below, the oxidant 68 and the fuel 70 may be supplied to the gas turbine engine 150 at locations specifically selected to facilitate isolation and extraction of the compressed exhaust gas 170 without any oxidant 68 or fuel 70 degrading the quality of the exhaust gas 170.

The EG supply system 78, as illustrated in FIG. 3, is disposed between the gas turbine engine 150 and the target systems (e.g., the hydrocarbon production system 12 and the other systems 84). In particular, the EG supply system 78, e.g., the EG extraction system (EGES) 80), may be coupled to the gas turbine engine 150 at one or more extraction points 76 along the compressor section 152, the combustor section 154, and/or the turbine section 156. For example, the extraction points 76 may be located between adjacent compressor stages, such as 2, 3, 4, 5, 6, 7, 8, 9, or 10 interstage extraction points 76 between compressor stages. Each of these interstage extraction points 76 provides a different temperature and pressure of the extracted exhaust gas 42. Similarly, the extraction points 76 may be located between adjacent turbine stages, such as 2, 3, 4, 5, 6, 7, 8, 9, or 10 interstage extraction points 76 between turbine stages. Each of these interstage extraction points 76 provides a different temperature and pressure of the extracted exhaust gas 42. By further example, the extraction points 76 may be located at a multitude of locations throughout the combustor section 154, which may provide different temperatures, pressures, flow rates, and gas compositions. Each of these extraction points 76 may include an EG extraction conduit, one or more valves, sensors, and controls, which may be used to selectively control the flow of the extracted exhaust gas 42 to the EG supply system 78.

The extracted exhaust gas 42, which is distributed by the EG supply system 78, has a controlled composition suitable for the target systems (e.g., the hydrocarbon production system 12 and the other systems 84). For example, at each of these extraction points 76, the exhaust gas 170 may be substantially isolated from injection points (or flows) of the oxidant 68 and the fuel 70. In other words, the EG supply system 78 may be specifically designed to extract the exhaust gas 170 from the gas turbine engine 150 without any added oxidant 68 or fuel 70. Furthermore, in view of the stoichiometric combustion in each of the combustors 160, the extracted exhaust gas 42 may be substantially free of oxygen and fuel. The EG supply system 78 may route the extracted exhaust gas 42 directly or indirectly to the hydrocarbon production system 12 and/or other systems 84 for use in various processes, such as enhanced oil recovery, carbon sequestration, storage, or transport to an offsite location. However, in certain embodiments, the EG supply system 78 includes the EG treatment system (EGTS) 82 for further treatment of the exhaust gas 42, prior to use with the target systems. For example, the EG treatment system 82 may purify and/or separate the exhaust gas 42 into one or more streams 95, such as the CO₂ rich, N₂ lean stream 96, the intermediate concentration CO₂, N₂ stream 97, and the CO₂ lean, N₂ rich stream 98. These treated exhaust gas streams 95 may be used individually, or in any combination, with the hydrocarbon production system 12 and the other systems 84 (e.g., the pipeline 86, the storage tank 88, and the carbon sequestration system 90).

Similar to the exhaust gas treatments performed in the EG supply system 78, the EG processing system 54 may include a plurality of exhaust gas (EG) treatment components 192, such as indicated by element numbers 194, 196, 198, 200, 202, 204, 206, 208, and 210. These EG treatment components 192 (e.g., 194 through 210) may be disposed along the exhaust recirculation path 110 in one or more series arrangements, parallel arrangements, or any combination of series and parallel arrangements. For example, the EG treatment components 192 (e.g., 194 through 210) may include any series and/or parallel arrangement, in any order, of: one or more heat exchangers (e.g., heat recovery units such as heat recovery steam generators, condensers, coolers, or heaters), catalyst systems (e.g., oxidation catalyst systems), particulate and/or water removal systems (e.g., inertial separators, coalescing filters, water impermeable filters, and other filters), chemical injection systems, solvent based treatment systems (e.g., absorbers, flash tanks, etc.), carbon capture systems, gas separation systems, gas purification systems, and/or a solvent based treatment system, or any combination thereof. In certain embodiments, the catalyst systems may include an oxidation catalyst, a carbon monoxide reduction catalyst, a nitrogen oxides reduction catalyst, an aluminum oxide, a zirconium oxide, a silicone oxide, a titanium oxide, a platinum oxide, a palladium oxide, a cobalt oxide, or a mixed metal oxide, or a combination thereof. The disclosed embodiments are intended to include any and all permutations of the foregoing components 192 in series and parallel arrangements. As illustrated below, TABLE 2 depicts some non-limiting examples of arrangements of the components 192 along the exhaust recirculation path 110.

**TABLE 2**

| **194** | **196** | **198** | **200** | **202** | **204** | **206** | **208** | **210** |
|---|---|---|---|---|---|---|---|---|
| CU | HRU | BB | MRU | PRU | | | | |
| CU | HRU | HRU | BB | MRU | PRU | DIL | | |
| CU | HRSG | HRSG | BB | MRU | PRU | | | |
| OCU | HRU | OCU | HRU | OCU | BB | MRU | PRU | |
| HRU | HRU | BB | MRU | PRU | | | | |
| CU | CU | | | | | | | |
| HRSG | HRSG | BB | MRU | PRU | DIL | | | |
| OCU | OCU | | | | | | | |
| OCU | HRSG | OCU | HRSG | OCU | BB | MRU | PRU | DIL |
| | OCU | | OCU | | | | | |
| OCU | HRSG | HRSG | BB | COND | INER | WFIL | CFIL | DIL |
| | ST | ST | | | | | | |
| OCU | OCU | BB | COND | INER | FIL | DIL | | |
| HRSG | HRSG | | | | | | | |
| ST | ST | | | | | | | |
| OCU | HRSG | HRSG | OCU | BB | MRU | MRU | PRU | PRU |
| | ST | ST | | | HE | WFIL | INER | FIL |
| | | | | | COND | | | CFIL |
| CU | HRU | HRU | HRU | BB | MRU | PRU | PRU | DIL |
| | COND | COND | COND | | HE | INER | FIL | |
| | | | | | COND | | CFIL | |
| | | | | | WFIL | | | |

As illustrated above in TABLE 2, a catalyst unit is represented by CU, an oxidation catalyst unit is represented by OCU, a booster blower is represented by BB, a heat exchanger is represented by HX, a heat recovery unit is represented by HRU, a heat recovery steam generator is represented by HRSG, a condenser is represented by COND, a steam turbine is represented by ST, a particulate removal unit is represented by PRU, a moisture removal unit is represented by MRU, a filter is represented by FIL, a coalescing filter is represented by CFIL, a water impermeable filter is represented by WFIL, an inertial separator is represented by INER, and a diluent supply system (e.g., steam, nitrogen, or other inert gas) is represented by DIL. Although TABLE 2 illustrates the components 192 in sequence from the exhaust outlet 182 of the turbine section 156 toward the exhaust inlet 184 of the compressor section 152, TABLE 2 is also intended to cover the reverse sequence of the illustrated components 192. In TABLE 2, any cell including two or more components is intended to cover an integrated unit with the components, a parallel arrangement of the components, or any combination thereof. Furthermore, in context of TABLE 2, the HRU, the HRSG, and the COND are examples of the HE; the HRSG is an example of the HRU; the COND, WFIL, and CFIL are examples of the WRU; the INER, FIL, WFIL, and CFIL are examples of the PRU; and the WFIL and CFIL are examples of the FIL. Again, TABLE 2 is not intended to exclude any non-illustrated permutations of the components 192. In certain embodiments, the illustrated components 192 (e.g., 194 through 210) may be partially or completed integrated within the HRSG 56, the EGR system 58, or any combination thereof. These EG treatment components 192 may enable feedback control of temperature, pressure, flow rate, and gas composition, while also removing moisture and particulates from the exhaust gas 60. Furthermore, the treated exhaust gas 60 may be extracted at one or more extraction points 76 for use in the EG supply system 78 and/or recirculated to the exhaust inlet 184 of the compressor section 152.

As the treated, recirculated exhaust gas 66 passes through the compressor section 152, the SEGR gas turbine system 52 may bleed off a portion of the compressed exhaust gas along one or more lines 212 (e.g., bleed conduits or bypass conduits). Each line 212 may route the exhaust gas into one or more heat exchangers 214 (e.g., cooling units), thereby cooling the exhaust gas for recirculation back into the SEGR gas turbine system 52. For example, after passing through the heat exchanger 214, a portion of the cooled exhaust gas may be routed to the turbine section 156 along line 212 for cooling and/or sealing of the turbine casing, turbine shrouds, bearings, and other components. In such an embodiment, the SEGR gas turbine system 52 does not route any oxidant 68 (or other potential contaminants) through the turbine section 156 for cooling and/or sealing purposes, and thus any leakage of the cooled exhaust gas will not contaminate the hot products of combustion (e.g., working exhaust gas) flowing through and driving the turbine stages of the turbine section 156. By further example, after passing through the heat exchanger 214, a portion of the cooled exhaust gas may be routed along line 216 (e.g., return conduit) to an upstream compressor stage of the compressor section 152, thereby improving the efficiency of compression by the compressor section 152. In such an embodiment, the heat exchanger 214 may be configured as an interstage cooling unit for the compressor section 152. In this manner, the cooled exhaust gas helps to increase the operational efficiency of the SEGR gas turbine system 52, while simultaneously helping to maintain the purity of the exhaust gas (e.g., substantially free of oxidant and fuel).

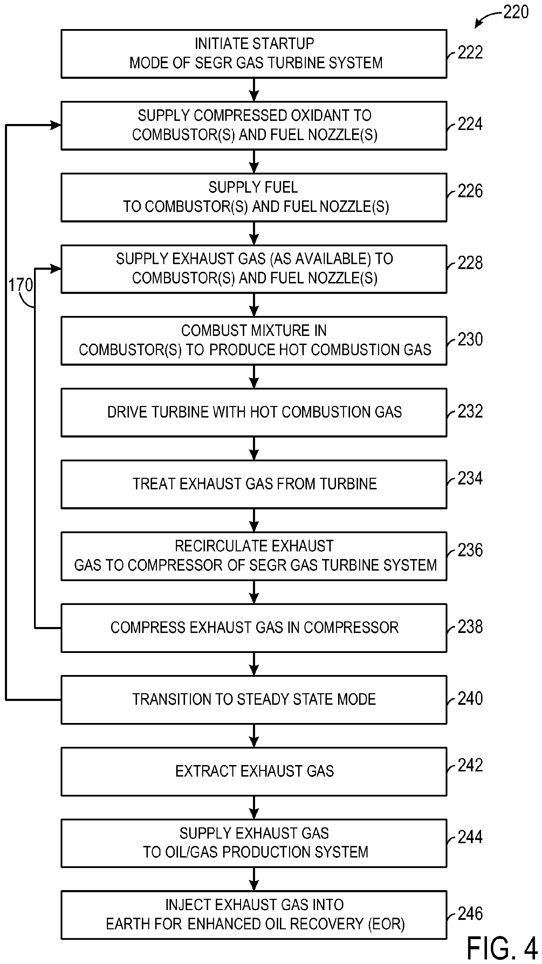

FIG. 4 is a flow chart of an embodiment of an operational process 220 of the system 10 illustrated in FIGS 1-3. In certain embodiments, the process 220 may be a computer implemented process, which accesses one or more instructions stored on the memory 122 and executes the instructions on the processor 120 of the controller 118 shown in FIG. 2. For example, each step in the process 220 may include instructions executable by the controller 118 of the control system 100 described with reference to FIG. 2.

The process 220 may begin by initiating a startup mode of the SEGR gas turbine system 52 of FIGS. 1-3, as indicated by block 222. For example, the startup mode may involve a gradual ramp up of the SEGR gas turbine system 52 to maintain thermal gradients, vibration, and clearance (e.g., between rotating and stationary parts) within acceptable thresholds. For example, during the startup mode 222, the process 220 may begin to supply a compressed oxidant 68 to the combustors 160 and the fuel nozzles 164 of the combustor section 154, as indicated by block 224. In certain embodiments, the compressed oxidant may include a compressed air, oxygen, oxygen-enriched air, oxygen-reduced air, oxygen-nitrogen mixtures, or any combination thereof. For example, the oxidant 68 may be compressed by the oxidant compression system 186 illustrated in FIG. 3. The process 220 also may begin to supply fuel to the combustors 160 and the fuel nozzles 164 during the startup mode 222, as indicated by block 226. During the startup mode 222, the process 220 also may begin to supply exhaust gas (as available) to the combustors 160 and the fuel nozzles 164, as indicated by block 228. For example, the fuel nozzles 164 may produce one or more diffusion flames, premix flames, or a combination of diffusion and premix flames. During the startup mode 222, the exhaust gas 60 being generated by the gas turbine engine 156 may be insufficient or unstable in quantity and/or quality. Accordingly, during the startup mode, the process 220 may supply the exhaust gas 66 from one or more storage units (e.g., storage tank 88), the pipeline 86, other SEGR gas turbine systems 52, or other exhaust gas sources.

The process 220 may then combust a mixture of the compressed oxidant, fuel, and exhaust gas in the combustors 160 to produce hot combustion gas 172, as indicated by block 230. In particular, the process 220 may be controlled by the control system 100 of FIG. 2 to facilitate stoichiometric combustion (e.g., stoichiometric diffusion combustion, premix combustion, or both) of the mixture in the combustors 160 of the combustor section 154. However, during the startup mode 222, it may be particularly difficult to maintain stoichiometric combustion of the mixture (and thus low levels of oxidant and unburnt fuel may be present in the hot combustion gas 172). As a result, in the startup mode 222, the hot combustion gas 172 may have greater amounts of residual oxidant 68 and/or fuel 70 than during a steady state mode as discussed in further detail below. For this reason, the process 220 may execute one or more control instructions to reduce or eliminate the residual oxidant 68 and/or fuel 70 in the hot combustion gas 172 during the startup mode.

The process 220 then drives the turbine section 156 with the hot combustion gas 172, as indicated by block 232. For example, the hot combustion gas 172 may drive one or more turbine stages 174 disposed within the turbine section 156. Downstream of the turbine section 156, the process 220 may treat the exhaust gas 60 from the final turbine stage 174, as indicated by block 234. For example, the exhaust gas treatment 234 may include filtration, catalytic reaction of any residual oxidant 68 and/or fuel 70, chemical treatment, heat recovery with the HRSG 56, and so forth. The process 220 may also recirculate at least some of the exhaust gas 60 back to the compressor section 152 of the SEGR gas turbine system 52, as indicated by block 236. For example, the exhaust gas recirculation 236 may involve passage through the exhaust recirculation path 110 having the EG processing system 54 as illustrated in FIGS. 1-3.

In turn, the recirculated exhaust gas 66 may be compressed in the compressor section 152, as indicated by block 238. For example, the SEGR gas turbine system 52 may sequentially compress the recirculated exhaust gas 66 in one or more compressor stages 158 of the compressor section 152. Subsequently, the compressed exhaust gas 170 may be supplied to the combustors 160 and fuel nozzles 164, as indicated by block 228. Steps 230, 232, 234, 236, and 238 may then repeat, until the process 220 eventually transitions to a steady state mode, as indicated by block 240. Upon the transition 240, the process 220 may continue to perform the steps 224 through 238, but may also begin to extract the exhaust gas 42 via the EG supply system 78, as indicated by block 242. For example, the exhaust gas 42 may be extracted from one or more extraction points 76 along the compressor section 152, the combustor section 154, and the turbine section 156 as indicated in FIG. 3. In turn, the process 220 may supply the extracted exhaust gas 42 from the EG supply system 78 to the hydrocarbon production system 12, as indicated by block 244. The hydrocarbon production system 12 may then inject the exhaust gas 42 into the earth 32 for enhanced oil recovery, as indicated by block 246. For example, the extracted exhaust gas 42 may be used by the exhaust gas injection EOR system 112 of the EOR system 18 illustrated in FIGS. 1-3.

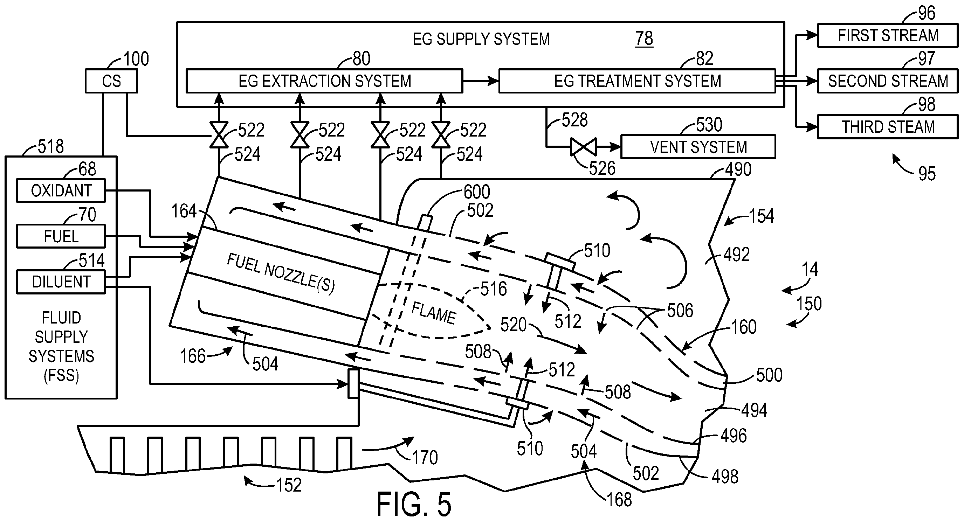

FIG. 5 is a diagram of an embodiment of the combustor section 154 of the gas turbine engine 150. As illustrated, the combustor section 154 has a casing 490 disposed about one or more combustors 160, thereby defining a compressor discharge cavity 492 between the casing 490 and the combustor 160. Each combustor 160 includes the head end portion 166 and the combustion portion 168. The combustion portion 168 may include a chamber 494, a first wall or liner 496 disposed about the chamber 494, and a second wall or flow sleeve 498 disposed at an offset around the first wall 496. For example, the first and second walls 496 and 498 may be generally coaxial with one another to define a hollow circumferential space or flow passage 500 leading from the combustion portion 168 to the head end portion 166. The second wall or flow sleeve 498 may include a plurality of openings or perforations 502, which enables the compressed exhaust gas 170 from the compressor section 152 to enter into the flow passage 500. The exhaust gas 170 then flows through the passage 500 along the liner 496 toward the head end portion 166 as indicated by arrows 504, thereby cooling the liner 496 as the exhaust gas 170 flows toward the head end portion 166 for delivery into the chamber 494 (e.g. through one or more fuel nozzles 164).

In certain embodiments, the liner 496 also may include one or more openings or perforations 506, thereby enabling injection of a portion of the exhaust gas 170 directly into the chamber 494 as indicated by arrows 508. For example, the exhaust gas injection 508 may serve as a diluent injection, which may be configured to control the temperature, pressure, flow rate, gas composition (e.g., emissions levels), or any combination thereof, within the chamber 494. In particular, the exhaust gas injection 508 may help to control the temperature within the chamber 494, such that emissions of nitrogen oxides (NOX) may be substantially reduced in the hot products of combustion. One or more additional diluents, such as nitrogen, steam, other inert gases, or additional exhaust gas, may be injected through one or more diluent injectors 510, as indicated by arrows 512. Together, the exhaust gas injection 508 and diluent injection 512 may be controlled (e.g.., via feedback control, feedfoward control, model-based control, and so on) to adjust the temperature, concentration levels of emissions, or other characteristics of the hot combustion gases flowing through the chamber 494.

In the head end portion 166, one or more fuel nozzles 164 may route the exhaust gas 170, the oxidant 68, the fuel 70, and one or more diluents 514 (e.g., exhaust gas, steam, nitrogen, other inert gases, or any combination thereof) into the chamber 494 for combustion. For example, each combustor 160 may include 1, 2, 3, 4, 5, 6, 7, 8, or more fuel nozzles 164, each configured as a diffusion fuel nozzle and/or a premix fuel nozzle. For example, each fuel nozzle 164 may deliver the oxidant 68, the fuel 70, the diluents 514, and/or the exhaust gas 170 as premixed or independent streams into the chamber 494, thereby generating a flame 516. The premixed streams of oxidant 68 and fuel 70 result in a premix flame, whereas separate streams of oxidant 68 and fuel 70 result in a diffusion flame. The control system 100 may be coupled to a plurality of sensors 600, such as pressure sensors, temperature sensors, gas composition sensors, (e.g., fuel composition sensors, oxygen sensors, etc.), flow sensors, flame sensors, emissions sensors (e.g., NOx sensors, SOx sensors, CO sensors, CO2 sensors, etc.), or any combination thereof. For example, the flame 516 may be observed by one or more sensors 600, including spectroscopic sensors, as described in more detail below, useful in measuring equivalence ration (phi) and/or products of combustion. The sensors 600 may be coupled to the fluid supplies (e.g., the oxidant 68, the fuel 70, the diluent 514, etc.), the EG supply system 78, the combustors 160, the fuel nozzles 164, or any combination thereof. The control system 100 may also employ model based control, as discussed below.

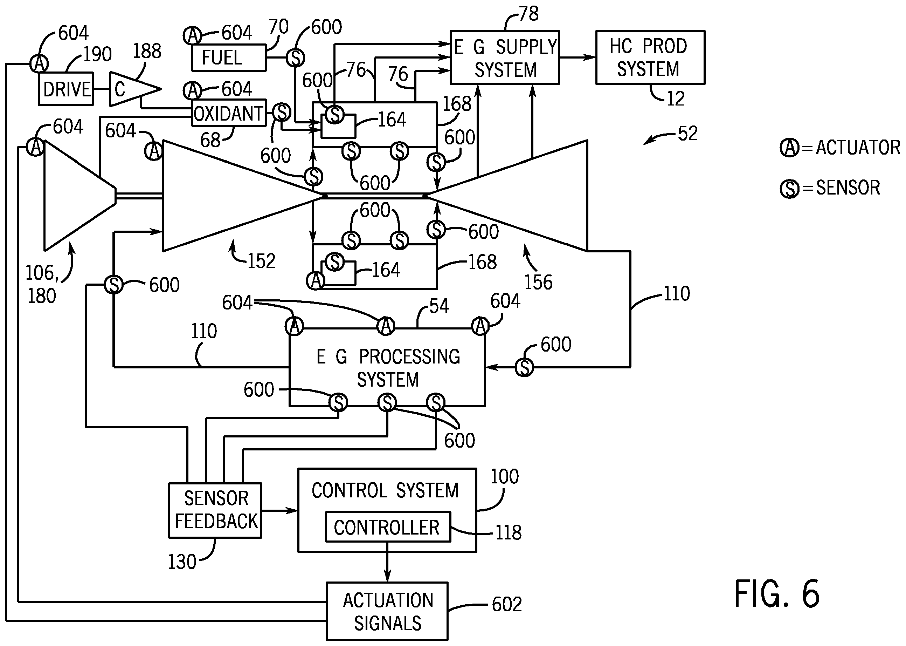

The control system 100 is coupled to one or more fluid supply systems 518, which control the pressure, temperature, flow rate, and/or mixtures of the oxidant 68, the fuel 70, the diluents 514, and/or the exhaust gas 170. For example, the control system 100 may independently control flows of the oxidant 68, the fuel 70, the diluents 514, and/or the exhaust gas 170 in order to control the equivalence ratio, emissions levels (e.g. carbon monoxide, nitrogen oxides, sulfur oxides, unburnt hydrocarbons, hydrogen, and/or oxygen), power output, or any combination thereof. The control system 100 may include a set of sensors 600, including lambda meters and/or spectroscopic sensors, as describe in more detail below with respect to FIG. 6, suitable for measuring phi, and using the measured phi during operations. In operation, the control system 100 may control the fluid supply systems 518 to increase the flows of oxidant 68 and fuel 70 while maintaining substantially stoichiometric combustion, or the control system 100 may control the fluid supply systems 518 to decrease the flows of oxidant 68 and fuel 70 while maintaining substantially stoichiometric combustion. The control system 100 may perform each of these increases or decreases in flow rates of the oxidant 68 and the fuel 70 in incremental steps (e.g., 1, 2, 3, 4, 5, or more steps), continuously, or any combination thereof. The control system 100 may use model based control, where a model of combustion is used to derive phi, for example, and control actions may be based on the derived phi.

Furthermore, the control system 100 may control the fluid supply systems 518 to increase or decrease the flows of oxidant 68 and fuel 70 in order to provide a fuel rich mixture, a fuel lean mixture, or any other mixture of the oxidant 68 and the fuel 70, into the chamber 494, thereby creating hot products of combustion or exhaust gas 520 with a low oxygen concentration, a high oxygen concentration, or any other suitable concentration of oxygen, unburnt hydrocarbons, carbon monoxide, nitrogen oxides, sulfur oxides, and so forth. While controlling the flows of oxidant 68 and fuel 70, the control system 100 also may control the fluid supply system 518 to increase or decrease flow of the diluents 514 (e.g., steam, exhaust gas, nitrogen, or any other inert gas), thereby helping to control the temperature, pressure, flow rate, and/or gas composition (e.g., emissions levels) of the hot products of combustion 520 passing through the chamber 494 toward the turbine section 156.

The control system 100 also may control the EG supply system 78, including the EG extraction system 80 and the EG treatment system 82. For example, the control system 100 may selectively open or close one or more valves 522 disposed along extraction lines 524 between the combustor section 154 and the EG extraction system 80. The control system 100 may selectively open or close these valves 522 to increase or decrease the flow of exhaust gas 42 to the EG extraction system 80, while also selectively extracting the exhaust gas from different locations resulting in different temperatures and/or pressures of the exhaust gas being delivered to the EG extraction system 80. The control system 100 also may control one or more valves 526 disposed along lines 528 leading to a vent system 530. For example, the control system 100 may selectively open the valve 526 to vent a portion of the exhaust gas through the vent system 530 into the atmosphere, thereby reducing the pressure in the EG supply system 78.

In certain embodiments, such as illustrated in FIG. 6, a plurality of sensors 600 (S) may be communicatively coupled to the control system 100, and the sensor feedback 130 may be used by the control system 100 to provide actuation signals 602. The actuation signals 602 may then be used by the control system 100 to actuate a plurality of actuators 604 (A). The sensors 600 may include sensors useful in directly or indirectly deriving phi and/or products of combustion. For example, lambda meters, and/or oxygen sensors may be used, suitable for measuring a proportion of oxygen before, during, and after combustion of the fuel 70 and oxidant 68 in the gas turbine 52 (e.g., fuel nozzles 164, combustion portion 168). The lambda sensors may determine, for example, a real time oxidant/fuel ration (e.g., oxygen/fuel or air/fuel ratio), useful in the real time derivation of phi. The sensors 600 may additionally or alternatively include spectroscopic sensors (e.g., optical spectroscopic sensors, laser-based sensors, waveguide grating sensors), chromatography sensors, and the like, useful in determining chemical makeup of the flame 516, fuel 70, oxidant 68, and/or products of combustion (e.g., nitrogen oxides, unburned hydrocarbons, carbon dioxide, carbon products, water, and so on). The sensors 600 may additionally include fuel sensors, flow sensors, pressure sensors, clearance sensors (e.g., distance between a rotating and a stationary component), humidity sensors, and/or temperature sensors.

For example, the sensor 600 feedback may include feedback from one or more intake oxidant sensors along an oxidant supply path of the oxidant 68, one or more intake fuel sensors along a fuel supply path of the fuel 70, and one or more exhaust emissions sensors disposed along the exhaust recirculation path 110 and/or within the SEGR gas turbine system 52. The intake oxidant sensors, intake fuel sensors, and exhaust emissions sensors may include temperature sensors, pressure sensors, flow rate sensors, and composition sensors. The emissions sensors may includes sensors for nitrogen oxides (e.g., NO_{X} sensors), carbon oxides (e.g., CO sensors and CO₂ sensors), sulfur oxides (e.g., SO_{X} sensors), hydrogen (e.g., H₂ sensors), oxygen (e.g., O₂ sensors), unburnt hydrocarbons (e.g., HC sensors), or other products of incomplete combustion, or any combination thereof.

The actuators 604 may include valves, linear motion actuators, non-linear motion actuators, positioners, switches, and so on, suitable for controlling components of the gas turbine 52. Accordingly, fuel 70 and oxidant 68 may be supplied through fuel nozzles 164, and as described above, the oxidant 68 may be additionally compressed by the compressor 188 driven by the drive 190, and combusted. The delivery of the fuel 70 and/or oxidant 68 may be calculated by the control system 100 (e.g., by the controller 118) as describe in more detail below, to provide for certain desired fuel/oxidant ratios or equivalence ratios, (e.g., 0,95 to 1.05 for substantially stoichiometric combustion), combustion dynamics measures, temperatures, pressures, flows, flame 516 characteristics, and the like. For example, the controller 118 may control the actuators 604 to stoichiometrically combust fuel 70 and oxidant 68 along with at least some of the recirculated exhaust gas (extracted at extraction points 76), and capture the exhaust gas in the exhaust gas supply system 78 for use in various target systems, such as the hydrocarbon production system 12 and/or the EG processing system 54. The combustion occurs at the combustion portions 168, resulting in the production of rotative power by the turbine section 156. The turbine section 156 may be mechanically coupled to the compressor section 152 by one or more shafts 176, thereby driving rotation of the shaft 176. Additionally, the shaft 176 may be mechanically coupled to the machinery 106, 180 and drive the machinery 106, 180.

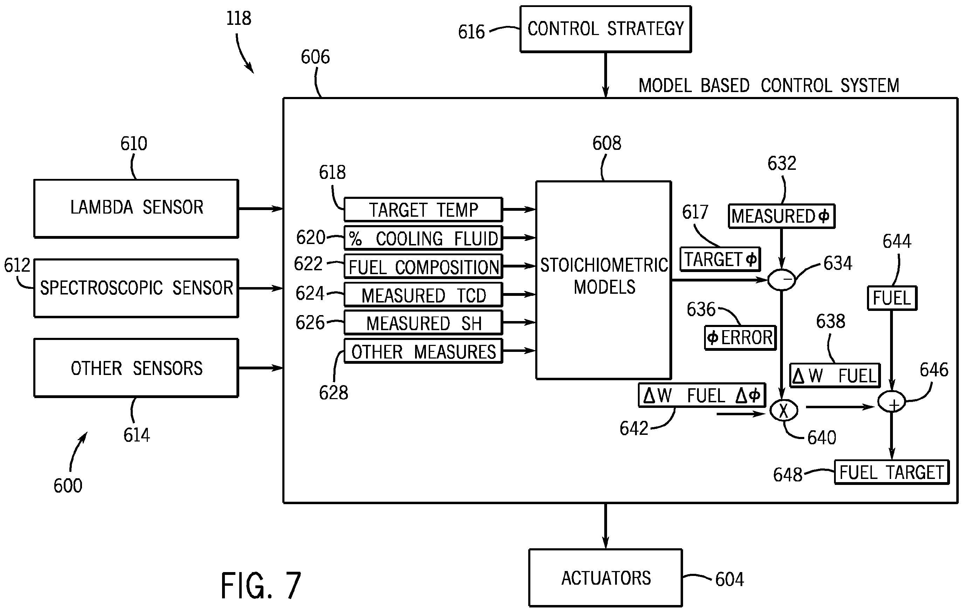

As depicted in FIG. 7, the controller 118 includes a model based control (MBC) system 606. The controller 118 may also include a triple modular redundant (TMR) controller having three processing cores useful in improving reliability of the control system 100. The MBC system 606 may use one or more stoichiometric models 608, including first principles models which are chemical models suitable for modeling combustion, including but not limited to stoichiometric combustion. The chemical models include one or more chemical equations suitable for modeling combustion, including products of combustion and stoichiometry. For example, the stoichiometric burning of hydrocarbon in oxygen (e.g., fuel + oxygen → heat + water + carbon dioxide) may be derived as CₓH_{y} + (x + y/4)O₂ → xCO₂ + (y/2) H₂O where x and y determine the hydrocarbon, for example, propane is determined with an x = 3 and y = 8 (e.g., C₃H₈). Any number of derivatives or combinations may be used, for example, if air is used as the oxidant 68, the fuel + oxygen → heat + water + carbon dioxide equation may be derived as CₓH_{y} + (x + y/4)O₂ + 3.76(x +y/4)N₂→ xCO₂ + (y/2) H₂O + 3.76 (x + y/4) to show the nitrogen component of air.

The models 608 may additionally include physics-based models, such as thermodynamic models, computational fluid dynamics (CFD) models, finite element analysis (FEA) models, solid models (e.g., parametric and non-parametric modeling), and/or 3-dimension to 2-dimension FEA mapping models that may be used to predict the products of combustion, stoichiometry, and/or the type and characteristics of the flame 516 (e.g., diffusion flame, premix flame). Models may also include artificial intelligence (AI) models, such as expert systems (e.g. forward chained expert systems, backward chained expert systems), neural networks, fuzzy logic systems, state vector machines (SVMs), inductive reasoning systems, Bayesian inference systems, or a combination thereof. The models 608 may additionally include statistical models, such as regression analysis models, data mining models (e.g., clustering models, classification models, association models), and the like useful in more accurately deriving products of combustion (e.g., CO, CO2, NOx, SOx, unburnt fuel, residual O2, etc.), the flame 516, and/or stoichiometry.

In the depicted embodiment, the sensors 600, such as a lambda sensor 610, a spectroscopic sensor 612, other sensors 614 (e.g., chromatography sensors, fuel sensors, flow sensors, pressure sensors, clearance sensors, humidity sensors, temperature sensors), and a control strategy 616 may be used by the controller 118 to derive certain model 608 inputs. For example, the control strategy 616 may include running the turbine 52 at a load (e.g., base load, partial load) with a desired phi (e.g., phi of approximately equal to 1, or between approximately 0.95 to 1.05). The control strategy 616 may additionally or alternatively include controlling the composition of exhaust gas from the turbine 52 to include little or no oxygen or unburnt fuel. The control strategy 616 may additionally include providing for a specific flame 516 (e.g., diffusion flame, premix flame). Advantageously, the techniques described herein enable firing temperature and/or phi control where turbine control may incorporate a direct (or derived) measure of phi useful in providing for the desired control strategy 616. For example, a target phi 617 (e.g., target equivalence ratio) may be derived by the models 608 using a target temperature 618 (e.g., combustor 160 firing temperature), a percent cooling fluid 620 (e.g., recirculated exhaust, nitrogen, air), a fuel composition, oxidant 68, diluents 514, a measured compressor discharge temperature 624 (TCD), a measured specific humidity 626, and other measures or inputs 628, such as exhaust gases, CO₂, nitrous oxides, particulate counts, and the like.

The target phi 617 may then be compared to a measured phi 632 (e.g., measured equivalence ratio). As mentioned above, phi may be measured by using the lambda meter 610, spectroscopic sensors 612, and/or other sensors 614 and derived in real time. The comparison of the target phi 617 to the measured phi 632 may use a comparator 634, resulting in a phi error 636. Accordingly, a fuel adjustment factor 638 may be derived by a fuel factor derivator system 640 that incorporates the phi error 636 and a current fuel factor 642. The fuel adjustment factor 638 may include changing a fuel flow, changing a fuel composition, changing fuel 70 to oxidizer 68 ratio, adding diluents 514, changing a fuel 70 type, manipulating properties of the flame 516, and so on. Thus, a current fuel usage 644 may be combined with the fuel adjustment factor 638, for example, by using a combinatory system 646, to arrive at a desired target fuel 648 that includes the fuel adjustments 638. Actuators 604 may then be actuated by using the actuation signals 602 (shown in FIG. 6) to provide for the desired target fuel 648 and/or desired type of flame 516 that may provide for a more close control of stoichiometric combustion having little or no oxygen and unburnt fuel in the exhaust. Control may also include temperature control, exhaust flow control (e.g., exhaust recirculated to the compressor section 152), treatment of the exhaust (e.g., catalytic reactions, cooling, moisture removal, temperature control), and/or diluent control (using nitrogen, steam, a non-oxygen gas, exhaust).

Because the measured phi 632 may be derived from measured products of combustion, in another embodiment, rather than using the target phi 617 and the measured phi 632 directly, measured and target products of combustion may be used as proxies for the target phi 617 and the measured phi 632. Accordingly, the measured products of combustion may be compared by the comparator 634 against target products of combustion, and a product of combustion error may be derived. The product of combustion error may be processed by the fuel factor derivator system 640 to arrive at the fuel adjustment factor 638. The combinatory system 646 may combine the fuel adjustment factor 638 with the current fuel usage 644 to derive the desired target fuel 648. Actuators 604 may then be controlled to provide for the desired fuel target 648. By using a direct measurement of phi 632 or by deriving phi (e.g., by using products of combustion measurements), the techniques described herein may then compare a target phi 617 derived by using the models 617, and adjust the SEGR gas turbine system 52 to more closely follow the control strategy 616, including a strategy that may provide for a substantially stoichiometric phi, such as a phi of approximately 1, or between 0.95 and 1.05. It is to be noted that a correction factor equivalent to the factor 638 may be used, including changing a recirculated exhaust, a fuel flow, an oxidizer flow, a diluents flow, a fuel composition, or a combination thereof.

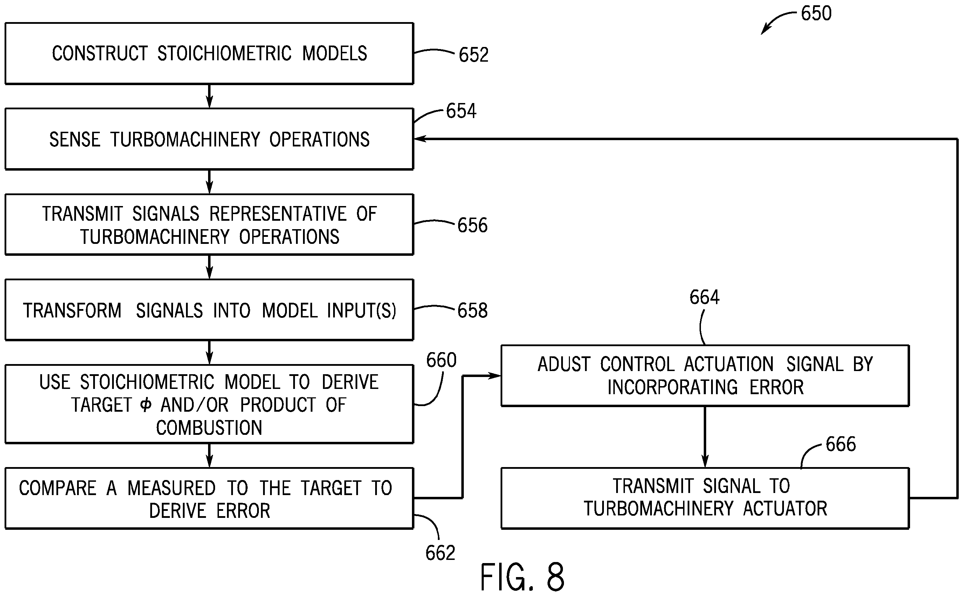

FIG. 8 is illustrative of an embodiment of a process 650 that may be used, for example, by the control system 100 to control the turbine 52. In the depicted embodiment, the process 650 may construct (block 652) one or more stoichiometric combustion models 608. As described above, the stoichiometric models 608 may include chemical models, thermodynamic models, physics models, statistical models, artificial intelligence (AI) models, suitable for modeling combustion and stoichiometric combustion. The process 650 may then sense (block 654) operations of the turbine system 52, for example, by using the sensors 600. The sensors 600, for example, may transmit signals representative of turbine 52 system operations (block 656), as shown in FIG. 6.

The process 650 may then transform (block 658) the signals into one or more model inputs 618, 620, 622, 624, 626, and/or 628 shown in FIG. 7 by using, for example, the controller 118. The process 650 may then use the models 608 to derive a target phi and/or target products of combustion (block 660). The measured phi 632 and/or measured products of combustion may then be compared to the target phi and/or target products of combustion (block 662) to derive an error. Control, for example, of the turbine system 52 and related systems (e.g., EG supply system 78, EG processing system 54) may then be adjusted (block 664) by adjusting control actuation signals that incorporate the error. The adjusted control signals (e.g., actuation signals 602) may then be transmitted (block 666) to one or more actuators 604. By incorporating a direct (or proxy) measure of phi 632, the techniques describe herein may more efficiently arrive at turbomachinery control suitable for stoichiometric combustion.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (10) comprising:
a gas turbine system comprising exhaust gas recirculation;
at least one sensor (600) configured to communicate a signal representative of the gas turbine system operations;
a controller (118) communicatively coupled to the sensor; and
a stoichiometric model (608) configured to receive one or more inputs representative of the gas turbine operations and a measured equivalence ratio (632) in the gas turbine system, wherein the stoichiometric model comprises a chemical equation modeling combustion, including products of combustion and stoichiometry; and wherein the one or more inputs comprise a compressor discharge temperature (TCD) (624), a target combustor firing temperature, a percent recirculated exhaust cooling fluid, a fuel composition, a measured compressor discharge temperature, a measured specific humidity, and a measured exhaust gas;
wherein the stoichiometric model is configured to derive a target equivalence ratio (617) based on the one or more inputs representative of the gas turbine operations; and
wherein the controller is configured to transform the signal into the one or more inputs, to compare the measured equivalence ratio to the target equivalence ratio to compute an equivalence error, and to use the stoichiometric model to derive an actuation signal (602) by using the equivalence error to provide for a substantially stoichiometric equivalence ratio.

2. The system of claim 1, wherein the controller is configured to derive the measured equivalence ratio by using a measured product of combustion.

3. The system of claim 1, wherein the controller is configured to derive the actuation signal to enable an equivalence ratio for combustion of approximately between 0.95 to 1.05.

4. The system of claim 1, wherein the stoichiometric model comprises a chemical model, a fuzzy logic model, and expert system model, a neural network model, a thermodynamic model, a physics model, a statistical models, an artificial intelligence (AI) model or a combination thereof.

5. The system of claim 4, wherein the chemical model comprises a chemical equation configured to derive a stoichiometric combustion of a fuel (70) with an oxidant (68), wherein the chemical equation comprises CₓH_{y} + (x + y/4)O₂ → xCO₂ + (y/2) H₂O where x and y determine the hydrocarbon.

6. The system of claim 1, wherein the at least one sensor comprises a lambda meter (610) and the signal is representative of an oxygen/fuel ratio.

7. The system of claim 1, wherein the at least one sensor comprises a spectroscopic sensor (612) and the signal is representative of a chemical composition of a combustion flame, a chemical composition of a fuel, a chemical composition of an oxidant, a chemical composition of a diluent, or a combination thereof.

8. The system of claim 1, comprising an exhaust gas (EG) processing system (54), and wherein the percent recirculating exhaust is provided by the EG processing system.

9. The system of claim 8, wherein the actuation signal is configured to actuate an exhaust valve included in the EG processing system.

10. A method, comprising:
sensing operations of a gas turbine system comprising exhaust gas recirculation;
transmitting a sensor signal representative of the operations of the gas turbine system;
converting the sensor signal into a model input, wherein the model input comprises a compressor discharge temperature (TCD), target combustor firing temperature; a percent recirculated exhaust cooling fluid, a fuel composition, a measured compressor discharge temperature; a measured specific humidity, and a measured exhaust gas;
communicating the model input into a stoichiometric model, wherein wherein the stoichiometric model is configured to derive a target equivalence ratio based on the model input and wherein the stoichiometric model comprises a chemical equation modeling combustion, including products of combustion and stoichiometry;
using the stoichiometric model to derive the target equivalence ratio;
comparing the target equivalence ratio to a measured equivalence ratio, deriving an equivalence ratio error;
deriving an actuation signal based on the comparing the target equivalence ratio to the measured equivalence ratio; and
transmitting the actuation signal to an actuator to provide for a substantially stoichiometric equivalence ratio .

11. The method of claim 10, wherein comparing the target equivalence ratio to the measured equivalence ratio comprises using the equivalence ratio error to derive a correction factor.

12. The method of claim 11, wherein the correction factor comprises changing a recirculated exhaust, a fuel flow, an oxidant flow, a diluents flow, a fuel composition, or a combination thereof.

13. The method of claim 10, comprising deriving the measured equivalence ratio by using a measured production of combustion.

14. The method of claim 10, wherein using the stoichiometric model comprises using a chemical model.

## Patentansprüche

1. System (10), das Folgendes aufweist:
ein Gasturbinensystem mit Abgasrückführung;
mindestens einen Sensor (600), der dazu ausgebildet ist, ein Signal zu übermitteln, das für Betriebsvorgänge des Gasturbinensystems repräsentativ ist;
eine Steuerung (118), die mit dem Sensor in Kommunikationsverbindung steht; und
ein stöchiometrisches Modell (608), das dazu ausgebildet ist, einen oder mehrere Eingänge zu empfangen, die für die Gasturbinenbetriebsvorgänge und ein gemessenes Äquivalenzverhältnis (632) in dem Gasturbinensystem repräsentativ sind, wobei das stöchiometrische Modell eine chemische Gleichung aufweist, die die Verbrennung einschließlich Verbrennungsprodukten und Stöchiometrie modelliert; und
wobei der eine oder die mehreren Eingänge eine Kompressorauslasstemperatur (TCD) (624), eine Verbrennungsabschnitt-Zielzündtemperatur, ein prozentuales zurückgeführtes Abgaskühlfluid, eine Kraftstoffzusammensetzung, eine gemessene Kompressorauslasstemperatur, eine gemessene spezifische Feuchtigkeit und ein gemessenes Abgas beinhalten;
wobei das stöchiometrische Modell dazu ausgebildet ist, ein Zieläquivalenzverhältnis (617) auf der Basis von dem einen oder den mehreren Eingängen abzuleiten, die für die Gasturbinenbetriebsvorgänge repräsentativ sind; und
wobei die Steuerung dazu ausgebildet ist, das Signal in den einen oder die mehrere Eingänge umzuwandeln, das gemessene Äquivalenzverhältnis mit dem Zieläquivalenzverhältnis zu vergleichen, um einen Äquivalenzfehler zu berechnen, sowie das stöchiometrische Modell zur Ableitung eines Betätigungssignals (602) zu verwenden, um unter Verwendung des Äquivalenzfehlers ein im Wesentlichen stöchiometrisches Äquivalenzverhältnis bereitzustellen.

2. System nach Anspruch 1,
wobei die Steuerung dazu ausgebildet ist, das gemessene Äquivalenzverhältnis unter Verwendung eines gemessenen Verbrennungsprodukts abzuleiten.

3. System nach Anspruch 1,
wobei die Steuerung dazu ausgebildet ist, das Betätigungssignal abzuleiten, um ein Äquivalenzverhältnis für die Verbrennung von ungefähr zwischen 0,95 und 1,05 zu ermöglichen.

4. System nach Anspruch 1,
wobei das stöchiometrische Modell ein chemisches Modell, ein Fuzzy-Logik-Modell, ein Expertensystemmodell, ein neuronales Netzwerkmodell, ein thermodynamisches Modell, ein Physikmodell, ein statistisches Modell, ein künstliches Intelligenzmodell (KI-Modell) oder eine Kombination davon aufweist.

5. System nach Anspruch 4,
wobei das chemische Modell eine chemische Gleichung umfasst, die dazu ausgebildet ist, eine stöchiometrische Verbrennung eines Kraftstoffs (70) mit einem Oxidationsmittel (68) abzuleiten, wobei die chemische Gleichung umfasst: CₓH_{y} + (x + y/4)O₂ → xCO₂ + (y/2) H₂O, wobei x und y den Kohlenwasserstoff bestimmen.

6. System nach Anspruch 1,
wobei der mindestens eine Sensor ein Lambda-Messgerät (610) umfasst und das Signal für ein Sauerstoff/Kraftstoff-Verhältnis repräsentativ ist.

7. System nach Anspruch 1,
wobei der mindestens eine Sensor einen spektroskopischen Sensor (612) umfasst und das Signal repräsentativ ist für eine chemische Zusammensetzung einer Verbrennungsflamme, eine chemische Zusammensetzung eines Kraftstoffs, eine chemische Zusammensetzung eines Oxidationsmittels, eine chemische Zusammensetzung eines Verdünnungsmittels oder eine Kombination davon.

8. System nach Anspruch 1,
das ein Abgas- (AG-) Verarbeitungssystem (54) aufweist, und wobei das prozentuale umlaufende Abgas durch das Abgas-Verarbeitungssystem bereitgestellt wird.

9. System nach Anspruch 8,
wobei das Betätigungssignal dazu ausgebildet ist, ein Auslassventil zu betätigen, das in dem Abgas-Verarbeitungssystem enthalten ist.

10. Verfahren, das folgende Schritte aufweist:
Erfassen von Betriebsvorgängen eines Gasturbinensystems mit Abgasrückführung;
Übermitteln eines Sensorsignals, das für die Betriebsvorgänge des Gasturbinensystems repräsentativ ist;
Umwandeln des Sensorsignals in einen Modelleingang, wobei der Modelleingang eine Kompressorauslasstemperatur (TCD), eine Verbrennungsabschnitt-Zielzündtemperatur, ein prozentuales zurückgeführtes Abgaskühlfluid, eine Kraftstoffzusammensetzung, eine gemessene Kompressorauslasstemperatur, eine gemessene spezifische Feuchtigkeit und ein gemessenes Abgas beinhaltet;
Übermitteln des Modelleingangs in ein stöchiometrisches Modell, wobei das stöchiometrische Modell dazu ausgebildet ist, ein Zieläquivalenzverhältnis auf der Basis von dem Modelleingang abzuleiten, und wobei das stöchiometrische Modell eine chemische Gleichung aufweist, die die Verbrennung einschließlich Verbrennungsprodukten und Stöchiometrie modelliert;
Verwenden des stöchiometrischen Modells zum Ableiten des Zieläquivalenzverhältnisses;
Vergleichen des Zieläquivalenzverhältnisses mit einem gemessenen Äquivalenzverhältnis unter Ableitung eines Äquivalenzverhältnisfehlers;
Ableiten eines Betätigungssignals auf der Basis des Vergleichs des Zieläquivalenzverhältnisses mit dem gemessenen Äquivalenzverhältnis; und
Übermitteln des Betätigungssignals zu einem Aktuator, um ein im Wesentlichen stöchiometrisches Äquivalenzverhältnis bereitzustellen.

11. Verfahren nach Anspruch 10,
wobei das Vergleichen des Zieläquivalenzverhältnisses mit dem gemessenen Äquivalenzverhältnis die Verwendung des Äquivalenzverhältnisfehlers zum Ableiten eines Korrekturfaktors beinhaltet.

12. Verfahren nach Anspruch 11,
wobei der Korrekturfaktor das Ändern eines zurückgeführten Abgases, einer Kraftstoffströmung, einer Oxidationsmittelströmung, einer Verdünnungsmittelströmung, einer Kraftstoffzusammensetzung oder einer Kombination davon beinhaltet.

13. Verfahren nach Anspruch 10,
das das Ableiten des gemessenen Äquivalenzverhältnisses unter Verwendung eines gemessenen Verbrennungsprodukts beinhaltet.

14. Verfahren nach Anspruch 10,
wobei die Verwendung des stöchiometrischen Modells die Verwendung eines chemischen Modells beinhaltet.

## Revendications

1. Système (10) comprenant :
un système de turbine à gaz comprenant une recirculation de gaz d'échappement ;
au moins un capteur (600) configuré pour communiquer un signal représentatif des opérations du système de turbine à gaz ;
un contrôleur (118) relié par communication au capteur ; et
un modèle stœchiométrique (608) configuré pour recevoir une ou plusieurs entrée(s) représentative(s) des opérations de la turbine à gaz et un rapport d'équivalence mesuré (632) dans le système de turbine à gaz, dans lequel le modèle stœchiométrique comprend une équation chimique qui modélise la combustion, comprenant les produits de combustion et la stœchiométrie ; et dans lequel la ou les entrée(s) comprend/comprennent une température de décharge de compresseur (TCD (624), une température de déclenchement de chambre de combustion cible, un pourcentage de liquide de refroidissement d'échappement remis en circulation, une composition de combustible, une température de décharge de compresseur mesurée, une humidité spécifique mesurée, et un gaz d'échappement mesuré ;
dans lequel le modèle stœchiométrique est configuré pour dériver un rapport d'équivalence cible (617) sur la base de la ou des entrée(s) représentative(s) des opérations de la turbine à gaz ; et
dans lequel le contrôleur est configuré pour transformer le signal en la ou les entrée(s), pour comparer le rapport d'équivalence mesuré avec le rapport d'équivalence cible afin de calculer une erreur d'équivalence, et pour utiliser le modèle stœchiométrique afin de dériver un signal de déclenchement (602) en utilisant l'erreur d'équivalence et obtenir un rapport d'équivalence sensiblement stœchiométrique.

2. Système selon la revendication 1, dans lequel le contrôleur est configuré pour dériver le rapport d'équivalence mesuré en utilisant un produit de combustion mesuré.

3. Système selon la revendication 1, dans lequel le contrôleur est configuré pour dériver le signal de déclenchement afin de permettre un rapport d'équivalence pour la combustion compris entre environ 0,95 et 1,05.

4. Système selon la revendication 1, dans lequel le modèle stœchiométrique comprend un modèle chimique, un modèle de logique floue, et un modèle de système expert, un modèle de réseau neural, un modèle thermodynamique, un modèle physique, un modèle statistique, un modèle d'intelligence artificielle (IA), ou une combinaison de ceux-ci.

5. Système selon la revendication 4, dans lequel le modèle chimique comprend une équation chimique configurée pour dériver une combustion stœchiométrique d'un combustible (70) avec un oxydant (68), dans lequel l'équation chimique comprend du CₓH_{y} + (x + y/4)O₂ -> xCO₂ + (y/2) H₂O, où x et y déterminent les hydrocarbures.

6. Système selon la revendication 1, dans lequel au moins un capteur comprend un système de mesure lambda (610) et le signal est représentatif d'un rapport oxygène/combustible.

7. Système selon la revendication 1, dans lequel au moins un capteur comprend un capteur spectroscopique (612) et le signal est représentatif d'une composition chimique d'une flamme de combustion, d'une composition chimique d'un combustible, d'une combustion chimique d'un oxydant, d'une composition chimique d'un diluant, ou d'une combinaison de celles-ci.

8. Système selon la revendication 1, comprenant un système de traitement de gaz d'échappement (EG) (54), et dans lequel le pourcentage d'échappement en recirculation est fourni par le système de traitement de gaz d'échappement.

9. Système selon la revendication 8, dans lequel le signal de déclenchement est configuré pour déclencher une soupape d'échappement incluse au système de traitement de gaz d'échappement.

10. Procédé, comprenant :
la détection des opérations d'un système de turbine à gaz comprenant une recirculation de gaz d'échappement ;
la transmission d'un signal de capteur représentatif des opérations du système de turbine à gaz ;
la conversion du signal de capteur en une entrée de modèle, dans lequel l'entrée de modèle comprend une température de décharge de compresseur (TCD), une température de déclenchement de chambre de combustion cible ; un pourcentage de liquide de refroidissement d'échappement en recirculation, une composition de combustible, température de décharge de compresseur mesurée ; une humidité spécifique mesurée, et un gaz d'échappement mesuré ;
la communication de l'entrée de modèle à un modèle stœchiométrique, dans lequel le modèle stœchiométrique est configuré pour dériver un rapport d'équivalence cible sur la base de l'entrée de modèle, et dans lequel le modèle stœchiométrique comprend une équation chimique qui modélise la combustion, comprenant les produits de combustion et la stœchiométrie ;
l'utilisation du modèle stœchiométrique pour dériver le rapport d'équivalence cible ;
la comparaison du rapport d'équivalence cible avec un rapport d'équivalence mesuré ;
la dérivation d'une erreur de rapport d'équivalence ;
la dérivation d'un signal de déclenchement sur la base de la comparaison du rapport d'équivalence cible avec le rapport d'équivalence mesuré ; et
la transmission du signal de déclenchement à un déclencheur afin d'obtenir un rapport d'équivalence sensiblement stœchiométrique.

11. Procédé selon la revendication 10, dans lequel la comparaison du rapport d'équivalence cible avec le rapport d'équivalence mesuré comprend l'utilisation de l'erreur de rapport d'équivalence pour dériver un facteur de correction.

12. Procédé selon la revendication 11, dans lequel le facteur de correction comprend la modification d'un échappement recirculé, d'un débit de combustible, d'un débit d'oxydant, d'un débit de diluant, d'une composition de combustible, ou d'une combinaison de ceux-ci.

13. Procédé selon la revendication 10, comprenant la dérivation du rapport d'équivalence mesuré en utilisant une production de combustion mesurée.

14. Procédé selon la revendication 10, dans lequel l'utilisation du modèle stœchiométrique comprend l'utilisation d'un modèle chimique.
